(19) 

Europäisches
Patentamt
European
Patent Office
Office européen
des brevets

(11) **EP 4 518 489 A1**

(12) **EUROPEAN PATENT APPLICATION**
published in accordance with Art. 153(4) EPC

(43) Date of publication:
**05.03.2025 Bulletin 2025/10**

(21) Application number: **23794933.4**

(22) Date of filing: **30.03.2023**

(51) International Patent Classification (IPC):
***H04W 72/04*** *(2023.01)*

(52) Cooperative Patent Classification (CPC):
**H04B 7/155; H04W 72/04; H04W 72/0453**

(86) International application number:
**PCT/CN2023/084983**

(87) International publication number:
**WO 2023/207498 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210474519**

(71) Applicant: **Datang Mobile Communications
Equipment Co., Ltd.
Beijing 100085 (CN)**

(72) Inventor: **LI, Xiaojiao
Beijing 100085 (CN)**

(74) Representative: **Studio Torta S.p.A.
Via Viotti, 9
10121 Torino (IT)**

(54) **BEAM INDICATION METHOD AND APPARATUS, AND REPEATER, HOST BASE STATION
AND STORAGE MEDIUM**

(57) Provided in the embodiments of the present disclosure are a beam indication method and apparatus, and a repeater, a host base station and a storage medium. The method comprises: receiving beam indication information, which is sent by a host base station, wherein the beam indication information is used for indicating a beam that is used by a repeater at a specified time unit; and determining, on the basis of the beam indication information, the beam that is used by the repeater at the specified time unit.

```
┌─────────────────────────────────────────────────┐
│ Receiving beam indication information transmitted │
│ from a ncr-Support base station, where the beam   │─── 101
│ indication information is used for indicating a    │
│ beam index used by the repeater in associated     │
│ time resources                                     │
└─────────────────────────────────────────────────┘
                         │
                         ▼
┌─────────────────────────────────────────────────┐
│ Determining the beam index used by the repeater   │
│ in the associated time resources based on the     │─── 102
│ beam indication information                        │
└─────────────────────────────────────────────────┘
```

FIG. 1

EP 4 518 489 A1

**Description**

CROSS-REFERENCES TO RELATED APPLICATIONS

The present application claims priority to Chinese application No. 202210474519.8 filed on April 29, 2022, entitled "Beam Indication Method and Apparatus, and Repeater, Host Base Station and Storage Medium", which is hereby incorporated by reference in its entirety.

FIELD

The present application relates to the field of communication, and in particular, to methods and apparatuses for beam indication, a repeater, a network-control repeater-Support (ncr-Support) base station and a storage medium.

BACKGROUND

A repeater is a relay product for a radio signal. Using a repeater for network deployment may extend the coverage of the communication network without increasing a quantity of base stations.

In the related art, in case that a repeater serves a base station, the base station may control some functions of the repeater by transmitting network control information. A problem of beam configuration for the repeater is an important issue that needs to be solved urgently in the industry.

BRIEF SUMMARY

Embodiments of the present application provide methods and apparatuses for beam indication, a repeater, a network-control repeater-Support (ncr-Support) base station and a storage medium, which solve a defect of no beam configuration for the repeater in the related art, and the ncr-Support base station may configure beam information for the repeater.

An embodiment of the present application provides a method for beam indication, performed by a repeater, including:

receiving beam indication information transmitted from a network-control repeater-Support (ncr-Support) base station, where the beam indication information is used for indicating a beam index used by the repeater in associated time resources; and
determining the beam index used by the repeater in the associated time resources based on the beam indication information.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, receiving the beam indication information transmitted from the ncr-Support base station includes:
receiving beam indication information periodically and/or aperiodically transmitted from the ncr-Support base station.
In an embodiment,

in case that the beam indication information is transmitted periodically, an indication mode of the beam indication information is a pattern indication mode; or,

in case that the beam indication information is transmitted aperiodically, an indication mode of the beam indication information is a side control information indication mode.

In an embodiment,
in case that the beam indication information is transmitted periodically, the beam indication information is transmitted through a higher layer parameter, a side control signaling or a media access control control element (MAC CE) command.

In an embodiment, the method further includes:
in case that associated time resources corresponding to the pattern indication mode and the side control information indication mode overlap, determining a beam used by the repeater in the associated time resource based on the side control information indication mode.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the associated time resource includes a given symbol, a given slot, a given subframe, or a given frame.

In an embodiment, the method further includes:
transmitting reporting information to the ncr-Support base station, the reporting information including at least one of the following information:

a beam quantity of all supported beams; or

a beam index value corresponding to each supported beam; or

a coverage type corresponding to each supported beam; or

a beam angle corresponding to each supported beam; or

a beam width corresponding to each supported beam.

In an embodiment, the reporting information is transmitted through any of the following modes:

transmitted through a higher layer parameter; or

transmitted through a media access control control element (MAC CE) command; or

transmitted through side control information.

In an embodiment, an indication mode of the reporting information includes at least one of the following modes:

indicating the coverage type through a bit of a preset length; or

indicating the beam angle through an enumeration type.

In an embodiment, the indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment,

a broadcast beam is not included in the second selectable set by default; or

a broadcast beam is included in the second selectable set by default; or

a broadcast beam is not included in the third selectable set by default; or

a broadcast beam is included in the third selectable set by default.

An embodiment of the present application provides a method for beam indication, performed by a network-control repeater-Support (ncr-Support) base station, including:

obtaining coverage information of a repeater, where the coverage information is used for characterizing a beam supported by the repeater; and

transmitting beam indication information to the repeater based on the coverage information of the repeater, where the beam indication information is used for indicating a beam index used by the repeater in associated time resources.

In an embodiment, the coverage information includes a beam index value corresponding to each beam supported by the repeater.

In an embodiment, the coverage information further includes one or more of the following information:

a beam quantity of all beams supported by the repeater; or

a coverage type corresponding to each beam supported by the repeater; or

a beam angle corresponding to each beam supported by the repeater; or

a beam width corresponding to each beam supported by the repeater.

In an embodiment, the method further includes:

determining a first table corresponding to the coverage information; and

in case that the first table includes the beam index value corresponding to each beam supported by the repeater, obtaining the beam quantity of all beams supported by the repeater based on a length of the first table.

In an embodiment, the method further includes:

determining a second table corresponding to the coverage information, where the second table includes the beam width corresponding to each beam supported by the repeater; and

in case that a beam coverage of the repeater does not overlap, obtaining the beam quantity of all beams supported by the repeater based on a first beam width and a predefined beam width granularity, where the first beam width is a beam width of a broadcast beam supported by the repeater.

In an embodiment, obtaining the beam quantity of all beams supported by the repeater based on the first beam width and the predefined beam width granularity includes:

obtaining a beam quantity n of all beams supported by the repeater based on a formula $n = 1 + \dfrac{m}{k}$, where m represents the first beam width, and k represents the predefined beam width granularity.

In an embodiment, obtaining the coverage information of the repeater includes:
obtaining the coverage information of the repeater based on reporting information transmitted from the repeater and/or predefined auxiliary coverage information.

In an embodiment, the reporting information is transmitted through any of the following modes:

transmitted through a higher layer parameter; or

transmitted through a media access control control element (MAC CE) command; or

transmitted through side control information.

In an embodiment, an indication mode of the reporting information includes at least one of the following modes:

indicating the coverage type through a bit of a preset length; or

indicating the beam angle through an enumeration type.

In an embodiment, the indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment,

a broadcast beam is not included in the second selectable set by default; or

a broadcast beam is included in the second selectable set by default; or

a broadcast beam is not included in the third selectable set by default; or

a broadcast beam is included in the third selectable set by default.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, transmitting the beam indication information to the repeater includes: transmitting beam indication information periodically and/or aperiodically to the repeater.

In an embodiment,

in case that the beam indication information is transmitted periodically, an indication mode of the beam indication information is a pattern indication mode; or

in case that the beam indication information is transmitted aperiodically, an indication mode of the beam indication information is a side control information indication mode.

In an embodiment, in case that the beam indication information is transmitted periodically, the beam indication information is transmitted through a higher layer parameter, a side control signaling or a media access control control element (MAC CE) command.

In an embodiment, in case that the beam indication information is transmitted in the side control information indication mode, the side control information indication mode includes at least one of the following modes:

indicating a signaling type through one or more bits; or

indicating a quantity of effective slots through a bit of a preset length.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the associated time resource includes a given symbol, a given slot, a given subframe, or a given frame.

An embodiment of the present application further provides a repeater, including a memory, a transceiver and a processor, where the memory is used for storing a computer program, the transceiver is used for receiving and transmitting data under control of the processor, and the processor is used for reading the computer program in the memory and performing steps of the method for beam indication described above.

An embodiment of the present application further provides a ncr-Support base station, including a memory, a transceiver and a processor, where the memory is used for storing a computer program, the transceiver is used for receiving and transmitting data under control of the processor, and the processor is used for reading the computer program in the memory and performing steps of the method for beam indication described above.

An embodiment of the present application provides an apparatus for beam indication, applied to a repeater, including:

a receiving unit, used for receiving beam indication information transmitted from a network-control repeater-Support (ncr-Support) base station, where the beam indication information is used for indicating a beam index used by the repeater in associated time resources; and

a first determining unit, used for determining the beam index used by the repeater in the associated time resources based on the beam indication information.

An embodiment of the present application provides an apparatus for beam indication, applied to a network-control repeater-Support (ncr-Support) base station, including:

a first obtaining unit, used for obtaining coverage information of a repeater, where the coverage information is used for characterizing a beam supported by the repeater; and
a second transmitting unit, used for transmitting beam indication information to the repeater based on the coverage information of the repeater, where the beam indication information is used for indicating a beam index used by the repeater in associated time resources.

An embodiment of the present application further provides a processor-readable storage medium, where the processor-readable storage medium stores a computer program, and the computer program is used for causing a processor to perform steps of the methods for beam indication described above.

In the methods and apparatuses for beam indication, the repeater, the ncr-Support base station and the storage medium provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, the used beam is in the same direction as the target user equipment, and the signal gain may be obtained.

BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.

FIG. 1 is a first schematic flowchart of a method for beam indication according to an embodiment of the present application;

FIG. 2 is a second schematic flowchart of a method for beam indication according to an embodiment of the present application;

FIG. 3 is a first schematic diagram of a method for beam indication according to an embodiment of the present application;

FIG. 4 is a second schematic diagram of a method for beam indication according to an embodiment of the present application;

FIG. 5 is a third schematic diagram of a method for beam indication according to an embodiment of the present application;

FIG. 6 is a schematic structural diagram of a repeater according to an embodiment of the present application;

FIG. 7 is a schematic structural diagram of a network-control repeater-Support (ncr-Support) base station according to an embodiment of the present application;

FIG. 8 is a first schematic structural diagram of an apparatus for beam indication according to an embodiment of the present application; and

FIG. 9 is a second schematic structural diagram of an apparatus for beam indication according to an embodiment of the present application.

DETAILED DESCRIPTION

In embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

Solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A radio terminal can communicate with one or more core networks (CN) via a radio access network (RAN), and the radio terminal can be a mobile terminal, such as a mobile phone (or "cellular" phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device involved in the embodiments of the present application may be a base station, and the base station may include a plurality of cells providing services for the terminal. Depending on the specific application, the network side device may also be called an access point, or may be a device in the access network that communicates with wireless terminal through one or more sectors on the air interface, or other names. Network device can be used to exchange received air frames with Internet Protocol (IP) packets, and act as a router between radio terminal and the rest of the access network, and the rest of the access network can include an Internet protocol (IP) communication network. The network side devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission can be performed between the network device and the terminal using one or more antennas and the MIMO transmission can be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

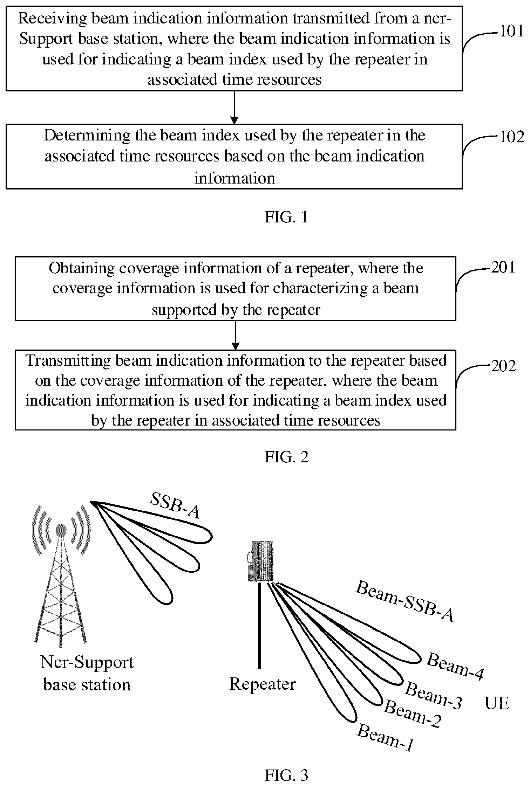

FIG. 1 is a first schematic flowchart of a method for beam indication according to an embodiment of the present application. As shown in FIG. 1, an embodiment of the present application provides a method for beam indication, which may be performed by a repeater, and includes the following steps.

Step 101: receiving beam indication information transmitted from a network-control repeater-Support (ncr-Support) base station, where the beam indication information is used for indicating a beam index used by the repeater in associated time resources.

In order to overcome the defect of no beam configuration for the repeater in the related art, the repeater may receive the beam indication information transmitted from the ncr-Support base station, and obtain the indication information of the ncr-Support base station for the beam configuration of the repeater, and the beam indication information may be information indicating the beam index used by the repeater in the associated time resources.

In an embodiment, the repeater may receive network control information transmitted from the ncr-Support base station, and the network control information may control the function specified by the repeater. The network control information may be beam indication information, and the beam indication information may control the function related to the beam configuration of the repeater.

Step 102: determining the beam index used by the repeater in the associated time resources based on the beam indication information.

In an embodiment, after receiving the beam indication information transmitted from the ncr-Support base station, the repeater may determine the beam used in the associated time resource based on the beam indication information. The beam indication information may be determined by the ncr-Support base station based on the beam supported by the repeater. The beam used by the repeater in the associated time resource may align with a target user equipment, and the used beam is in the same direction as the target user equipment.

In an embodiment, the repeater may serve the ncr-Support base station. The beam indication information may be determined by the ncr-Support base station based on the beam supported by the repeater and a measurement report reported from the target user equipment. The measurement report may include measurement information of the beam between the repeater and the terminal. By receiving the beam indication information transmitted from the ncr-Support base station, the repeater may obtain the indication information for the beam configuration of the repeater from the ncr-Support base station. The beam indication information may be information indicating the beam index used by the repeater in the associated time resources. The repeater performs beam configuration based on the beam indication information, and the beam direction may align with the target user equipment.

In the method for beam indication provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, the used beam is in the same direction as the target user equipment, and the signal gain may be obtained.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, the repeater may receive the beam indication information transmitted from the ncr-Support base station, obtain the indication information for the beam configuration of the repeater from the ncr-Support base station, and the beam indication information may include one or more information.

For example, the repeater may receive beam indication information transmitted from the ncr-Support base station, and the beam indication information may include one or more of the following: a configuration periodicity, an effective time offset, a resource location for acknowledge feedback, a beam index value, a candidate beam index set, or a beam quantity of all indicated beams.

For example, the repeater may receive beam indication information transmitted from the ncr-Support base station, and the beam indication information may include: an effective time offset, a beam index value and a candidate beam index set.

For example, the repeater may receive beam indication information transmitted from the ncr-Support base station, and the beam indication information may include: a beam index value and a candidate beam index set.

In an embodiment, the candidate beam index set may be a subset of the beam set, and the candidate beam index set may also be a universal set of the beam set.

In an embodiment, in case that the candidate beam index set is a subset of the beam set, the beam quantity of all indicated beams may be the beam quantity corresponding to the subset.

In an embodiment, in case that the candidate beam index set is a universal set of the beam set, the beam quantity of all indicated beams may be the beam quantity corresponding to the universal set.

In an embodiment, the repeater may receive beam indication information transmitted from the ncr-Support base station, and the beam indication information may include a resource location for acknowledge feedback. Then the repeater may perform acknowledge feedback at the given resource location after successfully receiving the beam indication information.

Therefore, the repeater may receive beam indication information transmitted from the ncr-Support base station, and the beam indication information may include one or more pieces of information. The beam used in the associated time resource may be determined based on the beam indication information, the beam index used by the repeater in the associated time resources may align with the target user equipment, and signal gain may be obtained.

In an embodiment, receiving the beam indication information transmitted from the ncr-Support base station includes:

receiving beam indication information periodically and/or aperiodically transmitted from the ncr-Support base station.

In an embodiment, the repeater may receive the beam indication information periodically transmitted from the ncr-Support base station, and the repeater may also receive the beam indication information aperiodically transmitted from the ncr-Support base station. The repeater may also receive the beam indication information periodically and aperiodically transmitted from the ncr-Support base station. By receiving the beam indication information transmitted from the ncr-Support base station, the repeater may obtain the indication information for the beam configuration of the repeater from the ncr-Support base station. The beam indication information may be information indicating the beam index used by the repeater in the associated time resources. The repeater performs beam configuration based on the beam indication information, and the beam direction may align with the target user equipment.

Therefore, the repeater may receive beam indication information periodically and/or aperiodically transmitted from the ncr-Support base station. The beam used in the associated time resource may be determined based on the beam indication information, the beam index used by the repeater in the associated time resources may align with the target user equipment, and signal gain may be obtained.

In an embodiment, in case that the beam indication information is transmitted periodically, an indication mode of the beam indication information is a pattern indication mode; or,

in case that the beam indication information is transmitted aperiodically, an indication mode of the beam indication information is a side control information indication mode.

In an embodiment, the repeater may receive the beam indication information periodically transmitted from the ncr-Support base station, and the indication mode of the beam indication information may be the pattern indication mode. The repeater may also receive the beam indication information aperiodically transmitted from the ncr-Support base station, and the indication mode of the beam indication information may be the side control information indication mode. By receiving the beam indication information transmitted from the ncr-Support base station, the repeater may obtain the indication information for the beam configuration of the repeater from the ncr-Support base station. The repeater performs beam configuration based on the beam indication information, and the beam direction may align with the target user equipment.

Therefore, the repeater may receive the beam indication information transmitted from the ncr-Support base station in a periodic pattern indication mode, and may also receive the beam indication information transmitted from the ncr-Support base station in an aperiodic side control information indication mode. The beam used in the associated time resource may be determined based on the beam indication information, the beam index used by the repeater in the associated time resources may align with the target user equipment, and signal gain may be obtained.

In an embodiment, in case that the beam indication information is transmitted periodically, the beam indication information is transmitted through a higher layer parameter, a side control signaling or a media access control control element (MAC CE) command.

In an embodiment, the repeater may receive the beam indication information periodically transmitted from the ncr-Support base station, and the beam indication information may be transmitted through a higher layer parameter, a side control signaling, or a MAC-CE.

For example, the repeater may receive the beam indication information periodically transmitted from the ncr-Support base station, and the beam indication information may be transmitted through a higher layer parameter.

For example, the repeater may receive the beam indication information periodically transmitted from the ncr-Support base station, and the beam indication information may be transmitted through a side control signaling.

For example, the repeater may receive the beam indication information periodically transmitted from the ncr-Support base station, and the beam indication information may be transmitted through a MAC-CE.

Therefore, the repeater may receive the beam indication information periodically transmitted from the ncr-Support base station, and the beam indication information may be transmitted through the higher layer parameter, the side control signaling, or the MAC-CE. The beam used in the associated time resource may be determined based on the beam indication information, the beam index used by the repeater in the associated time resources may align with the target user equipment, and signal gain may be obtained.

In an embodiment, the method for beam indication further includes:
in case that associated time resources corresponding to the pattern indication mode and the side control information indication mode overlap, determining a beam used by the repeater in the associated time resource based on the side control information indication mode.

In an embodiment, the repeater may receive the beam indication information transmitted from the ncr-Support base station in the periodic pattern indication mode, and may also receive the beam indication information transmitted from the ncr-Support base station in the aperiodic side control information indication mode. In case that associated time resources corresponding to the pattern indication mode and the side control information indication mode overlap, the beam index used by the repeater in the associated time resources may be determined based on the side control information indication mode.

In an embodiment, the beam information for a longer time may be indicated by a periodic pattern first, and then the configuration of several slots may be changed by an aperiodic indication mode. The aperiodic configuration may override the periodic configuration, that is, in case that the two configurations are inconsistent, the aperiodic configuration shall be a reference. It is more flexible to use both periodic and aperiodic indication modes.

Therefore, the repeater may receive the beam indication information transmitted from the ncr-Support base station in the pattern indication mode and the side control information indication mode. In case that the associated time resources corresponding to the two modes overlap, the beam index used by the repeater in the associated time resources may be determined based on the side control information indication mode. The beam used by the repeater in the associated time resource may align with the target user equipment, and signal gain may be obtained.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the repeater may receive the beam indication information transmitted from the ncr-Support base station, and the beam indication information may include an uplink/downlink indication identifier.

In an embodiment, the repeater may receive the beam indication information transmitted from the ncr-Support base station, and the beam indication information may include an uplink indication identifier and a downlink indication identifier.

In an embodiment, the repeater may receive the beam indication information transmitted from the ncr-Support base station, and the beam indication information may include an uplink/downlink indication identifier, an uplink indication identifier and a downlink indication identifier.

Therefore, the repeater may receive beam indication information transmitted from the ncr-Support base station, and the beam indication information may include one or more pieces of information. The beam used in the associated time resource may be determined based on the beam indication information, the beam index used by the repeater in the associated time resources may align with the target user equipment, and signal gain may be obtained.

In an embodiment, the associated time resource includes a given symbol, a given slot, a given subframe, or a given frame.

In an embodiment, the repeater may receive beam indication information transmitted from the ncr-Support base station, and obtain indication information of the ncr-Support base station for the beam configuration of the repeater. The beam indication information may be information indicating the beam index used by the repeater in the associated time resources, and the associated time resource may include a given symbol, a given slot, a given subframe, or a given frame.

In an embodiment, an indication granularity for the beam indication information may be a symbol level, a slot level, a subframe level, or a frame level.

For example, the indication granularity for the beam indication information may be a symbol level, and one symbol or multiple symbols may be specified.

Therefore, by receiving beam indication information transmitted from the ncr-Support base station, the indication granularity for the beam indication information may be one of multiple indication granularities, the repeater may determine the beam used in the associated time resource, and the ncr-Support base station may configure the beam information for the repeater. The beam used by the repeater in the associated time resource may align with the target user equipment, and the signal gain may be obtained.

In an embodiment, the method further includes:

transmitting reporting information to the ncr-Support base station, the reporting information including at least one of the following information:

a beam quantity of all supported beams; or

a beam index value corresponding to each supported beam; or

a coverage type corresponding to each supported beam; or

a beam angle corresponding to each supported beam; or

a beam width corresponding to each supported beam.

In an embodiment, the repeater may transmit reporting information to the ncr-Support base station, the reporting information may include one or more pieces of information, and the ncr-Support base station may obtain information of the beam supported by the repeater.

For example, the repeater may transmit reporting information to the ncr-Support base station, and the reporting information may include the beam quantity of all beams supported by the repeater.

For example, the repeater may transmit reporting information to the ncr-Support base station. The reporting information may include the beam quantity of all supported beams and the beam index value corresponding to each supported beam.

For example, the repeater may transmit reporting information to the ncr-Support base station. The reporting information may include a beam index value corresponding to each supported beam, a coverage type corresponding to each supported beam, and a beam angle corresponding to each supported beam.

For example, the repeater may transmit reporting information to the ncr-Support base station. The reporting information may include a beam index value corresponding to each supported beam, a coverage type corresponding to each supported beam, and a beam width corresponding to each supported beam.

Therefore, the repeater may transmit reporting information to the ncr-Support base station. The reporting information may include one or more pieces of information and the ncr-Support base station may obtain information of the beam supported by the repeater. The repeater may also receive the beam indication information transmitted from the ncr-Support base station. The repeater may determine the beam used in the associated time resource, and the ncr-Support base station may configure the beam information for the repeater. The beam used by the repeater in the associated time resource may align with the target user equipment, and the signal gain may be obtained.

In an embodiment, the reporting information is transmitted through any of the following:

transmitted through a higher layer parameter; or

transmitted through a MAC-CE; or

transmitted through side control information.

In an embodiment, the repeater may transmit reporting information to the ncr-Support base station in any of multiple reporting modes, and the reporting information may include one or more pieces of information. The ncr-Support base station may obtain information of the beam supported by the repeater.

In an embodiment, the repeater may transmit reporting information in the higher layer parameter.

In an embodiment, the repeater may transmit reporting information through the MAC-CE.

In an embodiment, the repeater may transmit reporting information in the side control information.

Therefore, the repeater may transmit reporting information to the ncr-Support base station in any of multiple reporting modes. The reporting information may include one or more pieces of information and the ncr-Support base station may obtain information of the beam supported by the repeater. The repeater may also receive the beam indication information transmitted from the ncr-Support base station. The repeater may determine the beam used in the associated time resource, and the ncr-Support base station may configure the beam information for the repeater. The beam used by the repeater in the associated time resource may align with the target user equipment, and the signal gain may be obtained.

In an embodiment, an indication mode of the reporting information includes at least one of the following modes:

indicating the coverage type through a bit of a preset length; or

indicating the beam angle through an enumeration type.

In an embodiment, the repeater may transmit reporting information to the ncr-Support base station in any of multiple reporting modes, and the indication mode of the reporting information may be one or more indication modes. The reporting information may include one or more pieces of information, and the ncr-Support base station may obtain information of the beam supported by the repeater.

In an embodiment, the indication mode of the reporting information may include indicating the coverage type through a bit of a preset length.

In an embodiment, the indication mode of the reporting information may include indicating the beam angle through an enumeration type.

In an embodiment, the indication mode of the reporting information may include indicating the coverage type through a bit of a preset length and indicating the beam angle through an enumeration type.

Therefore, the repeater may transmit reporting information to the ncr-Support base station in any of multiple reporting modes, and the indication mode of the reporting information may be one or more indication modes. The reporting information may include one or more pieces of information and the ncr-Support base station may obtain information of the beam supported by the repeater. The repeater may also receive the beam indication information transmitted from the ncr-Support base station. The repeater may determine the beam used in the associated time resource, and the ncr-Support base station may configure the beam information for the repeater. The beam used by the repeater in the associated time resource may align with the target user equipment, and the signal gain may be obtained.

In an embodiment, an indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, the repeater may transmit reporting information to the ncr-Support base station in any of multiple reporting modes, and the indication mode of the reporting information may be one or more indication modes. The reporting information may include one or more pieces of information, and the ncr-Support base station may obtain information of the beam supported by the repeater.

For example, the indication mode of the reporting information may include indicating a coverage type corresponding to all beams based on 1 bit, and indicating a beam width of all beams based on a first selectable set of predefined beam widths and multiple bits.

For example, the indication mode of the reporting information may include indicating a coverage type corresponding to each beam based on 1 bit, and indicating beam widths of each beam based on a first selectable set of predefined beam widths and multiple bits.

Therefore, the repeater may transmit reporting information to the ncr-Support base station in any of multiple reporting modes, and the indication mode of the reporting information may be one or more indication modes. The reporting information may include one or more pieces of information and the ncr-Support base station may obtain information of the beam supported by the repeater. The repeater may also receive the beam indication information transmitted from the ncr-Support base station. The repeater may determine the beam used in the associated time resource, and the ncr-Support base station may configure the beam information for the repeater. The beam used by the repeater in the associated time resource may align with the target user equipment, and the signal gain may be obtained.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment, the repeater may transmit reporting information to the ncr-Support base station. The reporting information may include the beam quantity of all supported beams, and the reporting mode of the beam quantity may include one or more reporting modes.

For example, the reporting mode of the beam quantity may include directly reporting the beam quantity.

For example, the reporting mode of the beam quantity may include reporting an index value of an element in a second selectable set based on the second selectable set with a predefined beam quantity and at least 1 bit.

For example, the reporting mode of the beam quantity may include reporting a quantity of beam groups based on a predefined quantity of beams in one group.

Therefore, the repeater may transmit reporting information to the ncr-Support base station, and the reporting information may include one or more pieces of information and the reporting mode of the beam quantity may be one or more reporting modes. The ncr-Support base station may obtain information of the beam supported by the repeater. The repeater may also receive the beam indication information transmitted from the ncr-Support base station. The repeater may determine the beam used in the associated time resource, and the ncr-Support base station may configure the beam information for the repeater. The beam used by the repeater in the associated time resource may align with the target user equipment, and the signal gain may be obtained.

In an embodiment, a broadcast beam is not included in the second selectable set by default; or

a broadcast beam is included in the second selectable set by default; or

a broadcast beam is not included in the third selectable set by default; or

a broadcast beam is included in the third selectable set by default.

In an embodiment, the repeater may transmit reporting information to the ncr-Support base station, and the reporting information may include the beam quantity of all supported beams. The reporting mode of the beam quantity may be one or more reporting methods. The second selectable set among multiple reporting modes may not include the broadcast beam by default or may include the broadcast beam by default. The third selectable set among multiple reporting modes may not include the broadcast beam by default or may include the broadcast beams by default.

Therefore, the repeater may transmit reporting information to the ncr-Support base station, and the reporting information may include one or more pieces of information and the reporting mode of the beam quantity may be one or more reporting modes. The ncr-Support base station may obtain information of the beam supported by the repeater. The repeater may also receive the beam indication information transmitted from the ncr-Support base station. The repeater may determine the beam used in the associated time resource, and the ncr-Support base station may configure the beam information for the repeater. The beam used by the repeater in the associated time resource may align with the target user equipment, and the signal gain may be obtained.

In the method for beam indication provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, the used beam is in the same direction as the target user equipment, and the signal gain may be obtained.

FIG. 2 is a second schematic flowchart of a method for beam indication according to an embodiment of the present application. As shown in FIG. 2, the method for beam indication according to an embodiment of the present application may be performed by a ncr-Support base station. The method includes:

Step 201: obtaining coverage information of a repeater, where the coverage information is used for characterizing a beam supported by the repeater.

In an embodiment, in order to overcome the defect of no beam configuration for the repeater in the related art, coverage information of the repeater may be obtained. The base station may obtain a beam supported by the repeater through the coverage information, and then determine the beam indication information for the repeater.

Step 202: transmitting beam indication information to the repeater based on the coverage information of the repeater, where the beam indication information is used for indicating a beam index used by the repeater in associated time resources.

In an embodiment, after obtaining the coverage information of the repeater, the ncr-Support base station may determine beam indication information for the repeater based on the beam supported by the repeater. The beam indication information may be used for indicating the beam index used by the repeater in the associated time resources. Then the beam indication information may be transmitted to the repeater, the beam index used by the repeater in the associated time resources may align with the target user equipment, and the beam used is in the same direction as a target user equipment.

In an embodiment, the ncr-Support base station may receive a measurement report reported from a target user equipment, and the measurement report may include measurement information of a beam between the repeater and a terminal. Then, the ncr-Support base station may determine the beam indication information based on the beam supported by the repeater and the measurement report reported from the target user equipment. The beam indication information may be information indicating the beam index used by the repeater in the associated time resources. Then, the ncr-Support base station may transmit the beam indication information to the repeater, the repeater may perform the beam configuration based on the beam indication information, and the beam direction may align with the target user equipment.

In the method for beam indication provided by the embodiment of the present application, the ncr-Support base station may obtain the beam supported by the repeater by obtaining the coverage information of the repeater, determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment. The beam used is in the same direction as the target user equipment, and signal gain may be obtained.

In an embodiment, the coverage information includes a beam index value corresponding to each beam supported by the repeater.

In an embodiment, the ncr-Support base station may obtain the coverage information of the repeater, and the coverage information may include a beam index value corresponding to each beam supported by the repeater. Through the coverage information, the ncr-Support base station may obtain the beam supported by the repeater, and then determine the beam indication information for the repeater.

In an embodiment, after obtaining the coverage information of the repeater, the ncr-Support base station may determine beam indication information for the repeater based on the beam supported by the repeater. The beam indication information may be used for indicating the beam index used by the repeater in the associated time resources, the beam indication information may be transmitted to the repeater, and the beam index used by the repeater in the associated time resources may align with the target user equipment.

Therefore, the ncr-Support base station may obtain the beam index value corresponding to each beam supported by the repeater by obtaining the coverage information of the repeater, determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, the coverage information further includes one or more of the following information:

a beam quantity of all beams supported by the repeater; or

a coverage type corresponding to each beam supported by the repeater; or

a beam angle corresponding to each beam supported by the repeater; or

a beam width corresponding to each beam supported by the repeater.

In an embodiment, the ncr-Support base station may obtain the coverage information of the repeater, and the coverage information may include a beam index value corresponding to each beam supported by the repeater. The coverage information may further include one or more pieces of information about the beam supported by the repeater.

In an embodiment, after obtaining the coverage information of the repeater, the ncr-Support base station may determine beam indication information for the repeater based on the beam supported by the repeater. The beam indication information may be used for indicating the beam index used by the repeater in the associated time resources, the beam indication information may be transmitted to the repeater, and the beam index used by the repeater in the associated time resources may align with the target user equipment.

For example, the coverage information may include: a beam index value corresponding to each beam supported by the repeater, and a beam quantity of all beams supported by the repeater.

For example, the repeater may transmit reporting information to the ncr-Support base station. The reporting information may include a beam index value corresponding to each beam supported by the repeater, a coverage type corresponding to each beam supported by the repeater and a beam angle corresponding to each beam supported by the repeater.

For example, the coverage information may include: a beam index value corresponding to each beam supported by the repeater, and a beam width corresponding to each beam supported by the repeater.

Therefore, by obtaining the coverage information of the repeater, the coverage information may include one or more pieces of information about the beam supported by the repeater. The ncr-Support base station may determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, the method further includes:

determining a first table corresponding to the coverage information; and

in case that the first table includes the beam index value corresponding to each beam supported by the repeater, obtaining the beam quantity of all beams supported by the repeater based on a length of the first table.

In an embodiment, the ncr-Support base station may obtain the coverage information of the repeater, and the coverage information may include the beam index value corresponding to each beam supported by the repeater. The coverage information may further include one or more pieces of information about the beams supported by the repeater, and then may determine the first table corresponding to the coverage information. Then, in case that the first table includes the beam index value corresponding to each beam supported by the repeater, the ncr-Support base station may obtain the beam quantity of all beams supported by the repeater based on the length of the first table.

Therefore, by obtaining the coverage information of the repeater, the coverage information may include one or more information about the beams supported by the repeater, and the ncr-Support base station may determine the beam quantity of all beams supported by the repeater based on the first table corresponding to the coverage information, then may determine the beam indication information of the repeater, and may transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, the method further includes:

determining a second table corresponding to the coverage information, where the second table includes the beam width corresponding to each beam supported by the repeater; and

in case that a beam coverage of the repeater does not overlap, obtaining the beam quantity of all beams supported by the repeater based on a first beam width and a predefined beam width granularity, where the first beam width is a beam width of a broadcast beam supported by the repeater.

In an embodiment, the ncr-Support base station may obtain the coverage information of the repeater, and the coverage information may include the beam index value corresponding to each beam supported by the repeater. The coverage information may further include one or more pieces of information about the beams supported by the repeater, and the ncr-Support base station then may determine the second table corresponding to the coverage information, the second table including the beam width corresponding to each beam supported by the repeater. Then, in case that a beam coverage of the repeater does not overlap, the ncr-Support base station may obtain the beam quantity of all beams supported by the repeater based on the first beam width and the predefined beam width granularity.

Therefore, by obtaining the coverage information of the repeater, the coverage information may include one or more information about the beams supported by the repeater. The ncr-Support base station may determine the beam quantity of all beams supported by the repeater based on the second table corresponding to the coverage information, then may determine the beam indication information of the repeater, and may transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, obtaining the beam quantity of all beams supported by the repeater based on the first beam width and the predefined beam width granularity includes:

obtaining a beam quantity n of all beams supported by the repeater based on a formula $n = 1 + \frac{m}{k}$, where m represents the first beam width, and k represents the predefined beam width granularity.

In an embodiment, the ncr-Support base station may obtain the coverage information of the repeater, and the coverage information may include the beam index value corresponding to each beam supported by the repeater. The coverage information may further include one or more pieces of information about the beams supported by the repeater, and the ncr-Support base station then may determine the second table corresponding to the coverage information, the second table including the beam width corresponding to each beam supported by the repeater. Then, in case that a beam coverage of the repeater does not overlap, the ncr-Support base station may obtain the beam quantity of all beams supported by the repeater by the following formula $n = 1 + \frac{m}{k}$ .

Therefore, by obtaining the coverage information of the repeater, the coverage information may include one or more information about the beams supported by the repeater. The ncr-Support base station may determine the beam quantity of all beams supported by the repeater based on the second table corresponding to the coverage information, then may determine the beam indication information of the repeater, and may transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, obtaining the coverage information of the repeater includes:
obtaining the coverage information of the repeater based on reporting information transmitted from the repeater and/or predefined auxiliary coverage information.

In an embodiment, the ncr-Support base station may obtain the coverage information of the repeater based on the reporting information transmitted from the repeater. The ncr-Support base station may also obtain the coverage information of the repeater based on the predefined auxiliary coverage information. The ncr-Support base station may also obtain the coverage information of the repeater based on both the reporting information transmitted from the repeater and the predefined auxiliary coverage information, where the coverage information may include the beam index value corresponding to each beam supported by the repeater, and the coverage information may also include one or more pieces of information about the beams supported by the repeater.

In an embodiment, after obtaining the coverage information of the repeater, the ncr-Support base station may determine beam indication information for the repeater based on the beam supported by the repeater. The beam indication information may be used for indicating the beam index used by the repeater in the associated time resources, the beam indication information may be transmitted to the repeater, and the beam index used by the repeater in the associated time resources may align with the target user equipment.

Therefore, the ncr-Support base station may obtain the coverage information of the repeater in one or more modes, and the coverage information includes one or more pieces of information about the beam supported by the repeater. The ncr-Support base station may determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, the reporting information is transmitted through any of the following:

transmitted through a higher layer parameter; or

transmitted through a MAC- CE; or

transmitted through side control information.

In an embodiment, the ncr-Support base station may receive the reporting information transmitted from the repeater in the higher layer parameter; the ncr-Support base station may also receive the reporting information transmitted from the repeater through the MAC-CE; the ncr-Support base station may also receive the reporting information transmitted from the repeater in the side control information. The ncr-Support base station may then obtain the coverage information of the repeater based on the reporting information transmitted from the repeater, where the coverage information may include the beam index value corresponding to each beam supported by the repeater, and the coverage information may further include one or more pieces of information about the beams supported by the repeater.

In an embodiment, after obtaining the coverage information of the repeater, the ncr-Support base station may determine beam indication information for the repeater based on the beam supported by the repeater. The beam indication information may be used for indicating the beam index used by the repeater in the associated time resources, the beam indication information may be transmitted to the repeater, and the beam index used by the repeater in the associated time resources may align with the target user equipment.

In an embodiment, the ncr-Support base station may obtain the coverage information of the repeater in the higher layer parameter.

In an embodiment, in case that the repeater accesses the ncr-Support base station, the ncr-Support base station may receive coverage information reported from the repeater in the higher layer parameter, and the coverage information may be the quantity of transmit/receive beams supported by the repeater.

In an embodiment, the ncr-Support base station may obtain a quantity of transmit/receive beams supported by the repeater based on predefined auxiliary coverage information, and may also receive coverage information reported from the repeater in the higher layer parameter, and the coverage information may include: the coverage type corresponding to each beam supported by the repeater, and the beam angle corresponding to each beam supported by the repeater.

In an embodiment, the ncr-Support base station may receive coverage information reported from the repeater through the SCI, and the coverage information may include: the quantity of transmit/receive beams supported by the repeater.

In an embodiment, the ncr-Support base station may receive coverage information reported from the repeater through the MAC-CE.

In an embodiment, the ncr-Support base station may receive coverage information reported from the repeater through the MAC-CE, and the coverage information may include: the quantity of transmit/receive beams supported by the repeater.

Therefore, the reporting mode of the repeater may be any one of multiple reporting modes, and the ncr-Support base station may obtain the coverage information of the repeater through the reporting information of the repeater and the coverage information includes one or more pieces of information about the beam supported by the repeater. The ncr-Support base station may determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, an indication mode of the reporting information includes at least one of the following modes:

indicating the coverage type through a bit of a preset length; or

indicating the beam angle through an enumeration type.

In an embodiment, the repeater may transmit reporting information to the ncr-Support base station in any of multiple reporting modes, and the indication mode of the reporting information may be one or more indication modes. The reporting information may include one or more pieces of information, and the ncr-Support base station may obtain information of the beam supported by the repeater.

In an embodiment, the indication mode of the reporting information may include indicating the coverage type through a bit of a preset length.

In an embodiment, the indication mode of the reporting information may include indicating the beam angle through an enumeration type.

In an embodiment, the indication mode of the reporting information may include indicating the coverage type through a bit of a preset length and indicating the beam angle through an enumeration type.

In an embodiment, the ncr-Support base station may receive the coverage information reported from the repeater in the higher layer parameter, and the coverage information may include: the quantity of transmit/receive beams supported by the repeater, and the coverage type corresponding to each beam supported by the repeater.

In an embodiment, 1 bit may be used for indicating whether the coverage type of the beam is a wide beam or a narrow beam.

In an embodiment, the ncr-Support base station may receive the coverage information reported from the repeater in the higher layer parameter, and the coverage information may include: the quantity of transmit/receive beams supported by the repeater, and the beam angle of each beam supported by the repeater.

In an embodiment, the beam angle may be indicated through an enumeration type.

Therefore, the reporting mode of the repeater may be any one of multiple reporting modes, and the indication mode of the reporting information may be one or more indication modes. The ncr-Support base station may obtain the coverage information of the repeater through the reporting information of the repeater and may further determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, an indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, the reporting mode of the repeater for transmitting the reporting information may be any one of multiple reporting modes, and the indication mode of the reporting information may be one or more indication modes. The reporting information may include one or more pieces of information, and the ncr-Support base station may obtain information of the beam supported by the repeater.

For example, the indication mode of the reporting information may include indicating a coverage type corresponding to all beams based on 1 bit, and indicating a beam width of all beams based on a first selectable set of predefined beam widths and multiple bits.

For example, the indication mode of the reporting information may include indicating a coverage type corresponding to each beam based on 1 bit, and indicating beam widths of each beam based on a first selectable set of predefined beam widths and multiple bits.

In an embodiment, the ncr-Support base station may receive the coverage information reported from the repeater through the SCI or MAC-CE, and the coverage information may include: the quantity of transmit/receive beams supported by the repeater, and the coverage type corresponding to each beam supported by the repeater.

In an embodiment, the coverage type corresponding to all beams may be indicated based on 1 bit (there is only one beam width, and each beam is consistent), and the coverage type may be a wide beam or a narrow beam.

In an embodiment, a coverage type corresponding to each beam is indicated based on 1 bit.

In an embodiment, the ncr-Support base station may receive the coverage information reported from the repeater through the SCI or MAC-CE, and the coverage information may include: the quantity of transmit/receive beams supported by the repeater, and the beam width corresponding to each beam supported by the repeater.

In an embodiment, the beam width of all beams may be indicated based on a first selectable set of the predefined beam width and multiple bits (there is only one beam width, and each beam is consistent).

In an embodiment, beam widths of each beam are indicated based on a first selectable set of predefined beam widths and multiple bits (may be indicated in sequence).

Therefore, the reporting mode of the repeater for transmitting the reporting information may be any one of multiple reporting modes, and the indication mode of the reporting information may be one or more indication modes. The ncr-Support base station may obtain the coverage information of the repeater through the reporting information of the repeater and may further determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment, the ncr-Support base station may obtain the coverage information of the repeater based on the reporting information transmitted from the repeater, the reporting information may include the beam quantity of all supported beams, and the reporting mode of the beam quantity may be one or more reporting modes.

For example, the reporting mode of the beam quantity may include directly reporting the beam quantity.

For example, the reporting mode of the beam quantity may include reporting an index value of an element in a second selectable set based on the second selectable set with a predefined beam quantity and at least 1 bit.

For example, the reporting mode of the beam quantity may include reporting a quantity of beam groups based on a predefined quantity of beams in one group.

Therefore, the ncr-Support base station may obtain the coverage information of the repeater based on the reporting information transmitted from the repeater. The reporting information may include one or more pieces of information and the reporting mode of the beam quantity may be one or more reporting modes, and the ncr-Support base station then may determine the beam indication information of the repeater and transmit the beam indication information to the repeater. The repeater may determine the beam used in the associated time resource, and the ncr-Support base station may configure the beam information for the repeater. The beam used by the repeater in the associated time resource may align with the target user equipment, and the signal gain may be obtained.

In an embodiment, a broadcast beam is not included in the second selectable set by default; or

a broadcast beam is included in the second selectable set by default; or

a broadcast beam is not included in the third selectable set by default; or

a broadcast beam is included in the third selectable set by default.

In an embodiment, the ncr-Support base station may obtain the coverage information of the repeater based on the reporting information transmitted from the repeater. The reporting information may include the beam quantity of all supported beams and the reporting mode of the beam quantity may be one or more reporting modes. The second selectable set among multiple reporting modes may not include the broadcast beam by default or may include the broadcast beam by default. The third selectable set among multiple reporting modes may not include the broadcast beam by default or may include the broadcast beams by default.

Therefore, the ncr-Support base station may obtain the coverage information of the repeater based on the reporting information transmitted from the repeater. The reporting information may include one or more pieces of information and the reporting mode of the beam quantity may be one or more reporting modes, and the ncr-Support base station then may determine the beam indication information of the repeater and transmit the beam indication information to the repeater. The repeater may determine the beam used in the associated time resource, and the ncr-Support base station may configure the beam information for the repeater. The beam used by the repeater in the associated time resource may align with the target user equipment, and the signal gain may be obtained.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, after obtaining the coverage information of the repeater, the ncr-Support base station may determine the beam indication information for the repeater based on the beams supported by the repeater, and the beam indication information may include one or more pieces of information.

For example, the beam indication information may include one or more of the following: a configuration periodicity, an effective time offset, a resource location for acknowledge feedback, a beam index value, a candidate beam index set, or a beam quantity of all indicated beams.

For example, the beam indication information may include: an effective time offset, a beam index value and a candidate beam index set.

For example, the beam indication information may include: a beam index value and a candidate beam index set.

In an embodiment, the candidate beam index set may be a subset of the beam set, and the candidate beam index set may also be a universal set of the beam set.

In an embodiment, in case that the candidate beam index set is a subset of the beam set, the beam quantity of all indicated beams may be the beam quantity of corresponding to the subset.

In an embodiment, in case that the candidate beam index set is a universal set of the beam set, the beam quantity of all indicated beams may be the beam quantity corresponding to the universal set.

In an embodiment, the beam indication information may include a resource location for acknowledge feedback, and then the repeater may perform acknowledge feedback at the given resource location after successfully receiving the beam indication information.

In an embodiment, the beam indication information may include a configuration periodicity, which may match a TDD period (for example, it may be an integer multiple of the TDD period) or may be configured separately.

In an embodiment, the beam indication information may include the beam index value and the candidate beam index set, and the candidate beam index set may be a subset of the beam set. Using the subset of the beam set may save signaling overhead.

Therefore, by obtaining the coverage information of the repeater, the ncr-Support base station may obtain the beam supported by the repeater, may determine the beam indication information for the repeater, and transmit the beam indication information to the repeater. The beam indication information may include one or more pieces of indication information. The repeater may determine the beam used in the associated time resource, and the ncr-Support base station may configure the beam information for the repeater. The beam used by the repeater in the associated time resource may align with the target user equipment and signal gain may be obtained.

In an embodiment, transmitting the beam indication information to the repeater includes:
transmitting beam indication information periodically and/or aperiodically to the repeater.

In an embodiment, the ncr-Support base station may transmit the beam indication information periodically to the repeater, and the ncr-Support base station may also transmit the beam indication information aperiodically to the repeater. The ncr-Support base station may also transmit the beam indication information periodically and aperiodically to the repeater. The beam indication information may be used for indicating the beam index used by the repeater in the associated time resources, and the beam index used by the repeater in the associated time resources may align with the target user equipment.

Therefore, the ncr-Support base station may transmit beam indication information periodically and/or aperiodically, the repeater may determine the beam used in the associated time resource, and the ncr-Support base station may configure beam information for the repeater. The beam used by the repeater in the associated time resource may align with the target user equipment, and signal gain may be obtained.

In an embodiment, in case that the beam indication information is transmitted periodically, an indication mode of the beam indication information is a pattern indication mode; or
in case that the beam indication information is transmitted aperiodically, an indication mode of the beam indication information is a side control information indication mode.

In an embodiment, the ncr-Support base station may transmit beam indication information to the repeater periodically, and the indication mode of the beam indication information may be a pattern indication mode. The ncr-Support base station may transmit beam indication information to the repeater aperiodically, and the indication mode of the beam indication information may be a side control information indication mode, the beam indication information may be used for indicating the beam index used by the repeater in the associated time resources, and the beam index used by the repeater in the associated time resources may align with the target user equipment.

In an embodiment, in case that the beam indication information is transmitted aperiodically, an indication mode of the beam indication information is an SCI indication mode.

In an embodiment, the SCI indication mode may be that each SCI schedules a beam corresponding to each symbol of one or more slots.

In an embodiment, in case that the indication mode of the beam indication information is the SCI indication mode, the beam indication information may include: a resource location for acknowledge feedback, and the repeater performs acknowledge feedback after successfully receiving the beam indication information.

Therefore, the ncr-Support base station may transmit the beam indication information to the repeater in a periodic pattern indication mode, and may also transmit the beam indication information to the repeater in an aperiodic side control information indication mode. The repeater may determine the beam used in the associated time resource, and the ncr-Support base station may configure beam information for the repeater. The beam used by the repeater in the associated time resource may align with the target user equipment, and signal gain may be obtained.

In an embodiment, in case that the beam indication information is transmitted periodically, the beam indication information is transmitted through a higher layer parameter, a side control signaling or a MAC-CE.

In an embodiment, the ncr-Support base station may transmit the beam indication information periodically to the repeater, and the beam indication information may be transmitted through a higher layer parameter, a side control signaling or a MAC-CE.

For example, the ncr-Support base station may transmit the beam indication information periodically to the repeater, and the beam indication information may be transmitted through a higher layer parameter.

For example, the ncr-Support base station may transmit the beam indication information periodically to the repeater, and the beam indication information may be transmitted through a side control signaling.

For example, the ncr-Support base station may transmit the beam indication information periodically to the repeater, and the beam indication information may be transmitted through a MAC-CE.

In an embodiment, the ncr-Support base station may transmit beam indication information periodically to the repeater through a higher layer signaling.

In an embodiment, the ncr-Support base station may transmit beam indication information periodically to the repeater through a MAC-CE.

In an embodiment, the ncr-Support base station may transmit beam indication information periodically to the repeater through an SCI.

In an embodiment, in case that the beam indication information is transmitted periodically, an indication mode of the beam indication information is a pattern indication mode.

In an embodiment, in case that the ncr-Support base station transmits beam indication information periodically to the repeater through the MAC-CE or the SCI, the beam indication information may include: a resource location for acknowledge feedback, and the repeater performs acknowledge feedback after successfully receiving the beam indication information.

Therefore, the ncr-Support base station may transmit the beam indication information periodically, and the beam indication information may be transmitted through the higher layer parameter, the side control signaling or the MAC-CE. The repeater may determine the beam used in the associated time resource, and the ncr-Support base station may configure beam information for the repeater. The beam used by the repeater in the associated time resource may align with the target user equipment, and signal gain may be obtained.

In an embodiment, in case that the beam indication information is transmitted in the side control information indication mode, the side control information indication mode includes at least one of the following modes:

indicating a signaling type through one or more bits; or

indicating a quantity of effective slots through a bit of a preset length.

In an embodiment, the ncr-Support base station may transmit beam indication information aperiodically to the repeater, the indication mode of the beam indication information may be a side control information indication mode, and the side control information indication mode may include one or more of multiple optional indication modes. The beam indication information may be used for indicating the beam index used by the repeater in the associated time resources, and the beam index used by the repeater in the associated time resources may align with the target user equipment.

In an embodiment, the side control information indication mode may include indicating a signaling type through one or more bits.

In an embodiment, the side control information indication mode may include indicating a quantity of effective slots through a bit of a preset length.

In an embodiment, the side control information indication mode may include indicating a signaling type through one or more bits and indicating a quantity of effective slots through a bit of a preset length.

Therefore, the ncr-Support base station may transmit beam indication information to the repeater through an aperiodic side control information indication mode, and the side control information indication mode may include one or more of multiple optional indication modes. The beam indication information may be used for indicating the beam index used by the repeater in the associated time resources, and the repeater may determine the beam used in the associated time resource, and the ncr-Support base station may configure beam information for the repeater. The beam used by the repeater in the associated time resource may align with the target user equipment, and signal gain may be obtained.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the ncr-Support base station may transmit beam indication information to the repeater, and the beam indication information may include an uplink/downlink indication identifier.

In an embodiment, the ncr-Support base station may transmit beam indication information to the repeater, and the beam indication information may include an uplink indication identifier and a downlink indication identifier.

In an embodiment, the ncr-Support base station may transmit beam indication information to the repeater, and the beam indication information may include an uplink/downlink indication identifier and an uplink indication identifier and a downlink indication identifier.

Therefore, by obtaining the coverage information of the repeater, the ncr-Support base station may obtain the beam supported by the repeater, and determine the beam indication information for the repeater. The beam indication information may include one or more pieces of information and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In an embodiment, the associated time resource includes a given symbol, a given slot, a given subframe, or a given frame.

In an embodiment, after obtaining the coverage information of the repeater, the ncr-Support base station may determine beam indication information for the repeater based on the beam supported by the repeater, and the beam indication information may be used for indicating the beam index used by the repeater in the associated time resources, the associated time resource may include a given symbol, a given slot, a given subframe, or a given frame. The beam indication information may be transmitted to the repeater, and the beam index used by the repeater in the associated time resources may align with the target user equipment.

In an embodiment, an indication granularity for the beam indication information may be a symbol level, a slot level, a subframe level, or a frame level.

For example, the indication granularity for the beam indication information may be a symbol level, and one symbol or multiple symbols may be specified.

Therefore, by obtaining the coverage information of the repeater, the ncr-Support base station may obtain the beam supported by the repeater, and determine the beam indication information for the repeater, an indication granularity of the beam indication information being one of multiple indication granularities and transmit the beam indication information to the repeater. The repeater may determine the beam used in the associated time resource, and the ncr-Support base station may configure the beam information for the repeater. The beam used by the repeater in the associated time resource may align with the target user equipment and signal gain may be obtained.

In the method for beam indication provided by the embodiment of the present application, the ncr-Support base station may obtain the beam supported by the repeater by obtaining the coverage information of the repeater, determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment. The beam used is in the same direction as the target user equipment, and signal gain may be obtained.

Optional examples of the present application are described below, but are not intended to limit the present application.

In an embodiment, FIG. 3 is a first schematic diagram of a method for beam indication according to an embodiment of the present application. As shown in FIG. 3, the repeater may receive a synchronization signal block A (SSB-A), and an area of SSB-A may be expanded in the coverage area of the repeater to generate multiple beam index values (Beam ID), for example, a beam Beam-1 with Beam ID of 1, a beam Beam-2 with Beam ID of 2, a beam Beam-3 with Beam ID of 3, and a beam Beam-4 with Beam ID of 4.

The ncr-Support base station may receive a measurement report reported from a target user equipment, and the measurement report may include measurement information of a beam between the repeater and a terminal. The ncr-Support base station may determine the beam indication information based on the beam supported by the repeater and the measurement report reported from the target user equipment. For example, as shown in FIG. 3, the ncr-Support base station may determine that a beam direction of Beam-3 may align with the target user equipment based on the measurement report reported by the target terminal, carry indication information indicating the use of Beam-3 in the slot corresponding to the target user equipment in the beam indication information, and transmit the beam indication information to the repeater. The repeater may perform the beam configuration based on the beam indication information, and the beam direction aligns with the target user equipment.

In an embodiment, the repeater reports a beam quantity n of supported by the repeater based on its own capabilities, and the reporting mode that may be used include one or more of the following modes:

a communication system specifies a selectable set of the beam quantity n, such as {2,4,8, 16}, and the repeater reports an index value of the element in the set; or,
the repeater may directly report the beam quantity n ranging from 1 to N, where N may be a maximum number of beams agreed in a communication system.

In an embodiment, whether the broadcast (omnidirectional) beam of the repeater is included in the beam quantity of the repeater may be determined in any of the following modes:

a communication system defaults that the repeater has a broadcast beam, and an element in the selectable set of a beam quantity are the beam quantity that do not include the broadcast beam, that is, the actual number is n+1 beams; or,

an element in the selectable set of the beam quantity are the beam quantity that include the broadcast beam, that is, the actual number is n beams.

In an embodiment, the repeater may report the beam quantity supported by the repeater in a group-based configuration mode based on its own capabilities. The communication system may specify that the quantity of beams in one group is n, and the repeater reports the number of beam groups m of the repeater based on its own capabilities, where in case that the communication system specifies that the quantity of beams in one group is n, the base station may indicate that a quantity of bits of the beam used by the repeater is $log_2 n$.

The communication system specifies a selectable set of the quantity of beam groups m, such as { 1,2,4,8 }, and the repeater reports the element index value in the set; or the repeater directly reports the quantity of beam groups m ranging from 1 to M, where M may be the maximum number of groups agreed in the communication system;
the group-based configuration method may not include broadcast (omnidirectional) beams, and the actual beam quantity used by the repeater is $m \times n + 1$.

In an embodiment, the repeater may transmit reporting information to the ncr-Support base station. The reporting information may include a beam index value corresponding to each beam supported by the repeater, a coverage type corresponding to each beam supported by the repeater, and a beam angle corresponding to each beam supported by the repeater. As shown in Table 1, the ncr-Support base station may determine a first table corresponding to the coverage information, and the communication system may pre-agree the coverage type as: 0 represents a wide beam (broadcast beam), 1 represents a narrow beam. For example, the repeater has a total of 5 beams, of which the first beam is a broadcast beam.

Table 1 Table 1 corresponding to coverage information

| Beam index value | Coverage type | Beam angle |
| --- | --- | --- |
| 0 | 0 (for broadcast beam) | Omnidirectional |
| 1 | 1 | 10 |
| 2 | 1 | 20 |
| 3 | 1 | 30 |
| 4 | 1 | 40 |

As shown in Table 1, in case that the first table may include the beam index value corresponding to each beam supported by the repeater, the beam quantity of all beams supported by the repeater may be obtained based on the length of the first table.

In an embodiment, the repeater may transmit reporting information to the ncr-Support base station. The reporting information may include a beam index value corresponding to each beam supported by the repeater and a beam angle corresponding to each beam supported by the repeater. As shown in Table 2, the ncr-Support base station may determine the first table corresponding to the coverage information, and the communication system may default the beam index value as 0 for SSB and broadcast. For example, the repeater has a total of 5 beams, of which one beam is a broadcast beam.

Table 2 Table 2 corresponding to coverage information

| Beam index value | Beam angle |
| --- | --- |
| 1 | 10 |
| 2 | 20 |
| 3 | 30 |
| 4 | 40 |

As shown in Table 2, in case that the first table may include the beam index value corresponding to each beam supported by the repeater, the beam quantity of all beams supported by the repeater may be obtained based on the length of the first table. The length of the table is 4, and the broadcast beam is included by default, and the beam quantity of all beams supported by the repeater is 5.

In an embodiment, the repeater may transmit reporting information to the ncr-Support base station. The reporting information may include a beam index value corresponding to each beam supported by the repeater; a beam width corresponding to each beam supported by the repeater; and a beam angle corresponding to each beam supported by the repeater. As shown in Table 3, the ncr-Support base station may determine the first table corresponding to the coverage information, and the communication system may pre-agree the granularity of the beam width (for example, the granularity here is 10). For example, the repeater has a total of 5 beams, one of which is a broadcast beam.

Table 3 Table 3 corresponding to coverage information

| Beam Index Value | Beam Width | Beam Angle |
|---|---|---|
| 0 | 40 | Omnidirectional |
| 1 | 10 | 10 |
| 2 | 10 | 20 |
| 3 | 10 | 30 |
| 4 | 10 | 40 |

As shown in Table 3, in case that the first table may include the beam index value corresponding to each beam supported by the repeater, the beam quantity of all beams supported by the repeater may be obtained based on the length of the first table.

In an embodiment, the repeater may transmit reporting information to the ncr-Support base station. The reporting information may include a beam index value corresponding to each beam supported by the repeater and a beam width corresponding to each beam supported by the repeater. As shown in Table 4, the ncr-Support base station may determine the second table corresponding to the coverage information, and the communication system may pre-agree the granularity of the beam width (for example, the granularity here is 10). For example, the repeater has a total of 5 beams, one of which is a broadcast beam.

Table 4 Table 4 corresponding to coverage information

| Beam index value | Beam width |
|---|---|
| 0 | 40 |
| 1 | 10 |

As shown in Table 4, in case that a beam coverage of the repeater does not overlap, the beam quantity of all beams supported by the repeater may be obtained based on a first beam width and a predefined beam width granularity, where the first beam width is a beam width of a broadcast beam supported by the repeater. A beam quantity n of all beams supported by the repeater may be obtained based on a formula $n = 1 + \frac{m}{k}$, where m represents the first beam width, and k represents the predefined beam width granularity and the beam quantity supported by the repeater may be calculated to be 5.

In an embodiment, the repeater may transmit reporting information to the ncr-Support base station. The reporting information may include a beam index value corresponding to each beam supported by the repeater, a beam width corresponding to each beam supported by the repeater, and the number of all beams supported by the repeater. As shown in Table 5, the communication system may pre-agree an available set or a maximum value of the beam quantity, and the repeater reports the beam width and the beam quantity supported by it. For example, the repeater has a total of 9 beams, one of which is a broadcast beam.

Table 5 Table 5 corresponding to coverage information

| Beam Index Value | Beam Width | Beam quantity |
|---|---|---|
| 0 | 60 | 1 |
| 1 | 10 | 8 |

In an embodiment, after the coverage information of the repeater is obtained, the beam indication information may be determined for the repeater based on the beams supported by the repeater. The beam indication information may include the beam index value and the candidate beam index set. The candidate beam index set is the universal set of beam sets, that is, the ncr-Support base station may directly use the beam set and beam index value reported from the repeater to indicate the repeater beam, and may indicate the beam index value used by the repeater in each uplink and downlink symbol.

In an embodiment, after the coverage information of the repeater is obtained, the beam indication information may be determined for the repeater based on the beams supported by the repeater. The beam indication information may include the beam index value and the candidate beam index set. The candidate beam index set is a subset of the beam set.

The ncr-Support base station may select a part of the beams as the beam set to be indicated based on the beam set and beam index value reported by the repeater, that is, a beam subset as the candidate beam index set, and notify the repeater of the element index value in the beam subset. In case that an original beam index value is 0~9, the ncr-Support base station indicates that the beam subset is {0,3,4,5 }.

The ncr-Support base station may indicate the repeater beam, and the ncr-Support base station may indicate the beam subset index value used by the repeater in each uplink and downlink symbol. For example, the beam subset is {0,3,4,5}, the ncr-Support base station indicates the beam with index value 2, that is, a beam with repeater index value of 4. The size n of the beam subset determines a quantity of bits used by indication of the base station $log_2n$.

The ncr-Support base station may indicate the beam subset uniformly or separately for uplink and downlink.

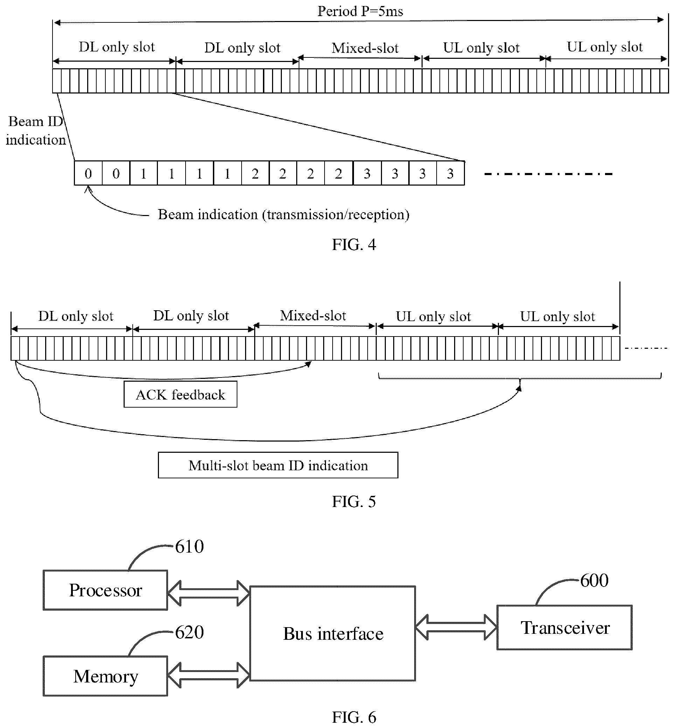

In an embodiment, FIG. 4 is a second schematic diagram of a method for beam indication according to an embodiment of the present application. As shown in FIG. 4, the ncr-Support base station may transmit beam indication information to the repeater periodically, and the indication mode of the beam indication information may be a pattern indication mode. The beam indication information may be used for indicating a beam index used by the repeater in associated time resources, and the beam index used by the repeater in the associated time resources may align with the target user equipment. The downlink beam subset may be a total of 4 beams {0,3,4,5}, and the indication granularity may be 1 symbol, then each symbol uses a 2-bit beam index value (Beam ID) to indicate the beam, and the pattern indication of a slot is shown in FIG. 4. The pattern indication is 00111122223333, where a downlink (DL) only slot indicates a downlink slot, an uplink (UL) only slot indicates an uplink slot, and a mixed-slot indicates a mixed slot. The indication granularity may be indicated based on a larger granularity, such as 7 symbols, or one slot, etc.

In an embodiment, FIG. 5 is a third schematic diagram of a method for beam indication according to an embodiment of the present application. As shown in FIG. 5, the ncr-Support base station may transmit beam indication information to the repeater aperiodically, and the indication mode of the beam indication information may be a side control indication mode. The beam indication information may be used for indicating a beam index used by the repeater in associated time resources, and the beam index used by the repeater in the associated time resources may align with the target user equipment. As shown in FIG. 5, the base station transmits SCI through a downlink control resource (a slot marked as A in FIG. 5) to notify a receive beam of the repeater in the designated uplink slot (a slot marked as C in FIG. 5). Each symbol or multiple symbols may indicate a beam with a beam index value (Beam ID), where DL only slot indicates a downlink slot, UL only slot indicates an uplink slot, and mixed-slot indicates a mixed slot.

In an embodiment, the ncr-Support base station can notify the repeater of feeding back acknowledge (ACK) on the designated uplink resource (a slot marked as B in FIG. 5). After receiving the SCI, the repeater feeds back ACK on the designated uplink resource.

In an embodiment, in case that the beam indication information is transmitted in the side control information indication mode, the side control information indication mode may include at least one of the following modes:

indicating a signaling type through one or more bits; or

indicating a quantity of effective slots through a bit of a preset length; or

indicating the beam for each symbol/multiple symbols.

In the method for beam indication provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, and the used beam is in the same direction as the target user equipment, and the signal gain may be obtained.

FIG. 6 is a schematic structural diagram of a repeater according to an embodiment of the present application. As shown in FIG. 6, the repeater includes a memory 620, a transceiver 600, and a processor 610,

where the memory 620 is used for storing a computer program, the transceiver 600 is used for receiving and transmitting data under the control of the processor, and the processor 610 is used for reading the computer program in the memory 620 and performing the following operations:

receiving beam indication information transmitted from a ncr-Support base station, where the beam indication information is used for indicating a beam index used by the repeater in associated time resources; and

determining the beam index used by the repeater in the associated time resources based on the beam indication information.

In the repeater provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, and the used beam is in the same direction as the target user equipment, and the signal gain may be obtained.

The transceiver 600 is used for receiving and transmitting data under control of the processor 610.

In FIG. 6, a bus architecture may include any number of interconnected buses and bridges, which are linked together through various circuits of one or more processors represented by processor 610 and one or more memories represented by the memory 620. The bus architecture may also link together various other circuits, such as peripherals, voltage regulators, and power management circuits, which are well known in the art, and therefore will not be further described in the present application. The bus interface provides an interface. The transceiver 600 may be multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor can also use a multi-core architecture.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, receiving the beam indication information transmitted from the ncr-Support base station includes:
receiving beam indication information periodically and/or aperiodically transmitted from the ncr-Support base station.

In an embodiment, in case that the beam indication information is transmitted periodically, an indication mode of the beam indication information is a pattern indication mode; or
in case that the beam indication information is transmitted aperiodically, an indication mode of the beam indication information is a side control information indication mode.

In an embodiment, in case that the beam indication information is transmitted periodically, the beam indication information is transmitted through a higher layer parameter, a side control signaling or a media access control control element (MAC CE) command.

In an embodiment, the operations further include:
in case that associated time resources corresponding to the pattern indication mode and the side control information indication mode overlap, determining a beam used by the repeater in the associated time resource based on the side control information indication mode.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the associated time resource includes a given symbol, a given slot, a given subframe, or a given frame.

In an embodiment, the operations further include:
transmitting reporting information to the ncr-Support base station, the reporting information including at least one of the following information:

a beam quantity of all supported beams; or

a beam index value corresponding to each supported beam; or

a coverage type corresponding to each supported beam; or

a beam angle corresponding to each supported beam; or

a beam width corresponding to each supported beam.

In an embodiment, the reporting information is transmitted through any of the following:

transmitted through a higher layer parameter; or

transmitted through a media access control control element (MAC CE) command; or

transmitted through side control information.

In an embodiment, an indication mode of the reporting information includes at least one of the following modes:

indicating the coverage type through a bit of a preset length; or

indicating the beam angle through an enumeration type.

In an embodiment, an indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment, a broadcast beam is not included in the second selectable set by default; or

a broadcast beam is included in the second selectable set by default; or

a broadcast beam is not included in the third selectable set by default; or

a broadcast beam is included in the third selectable set by default.

In the repeater provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, and the used beam is in the same direction as the target user equipment, and the signal gain may be obtained.

It should be noted here that the above-mentioned repeater according to the embodiments of the present application may implement all the method steps implemented by the above-mentioned method embodiments performed by the repeater, and may achieve the same effect. The same parts and beneficial effects as the same method embodiments is not repeated in the present application.

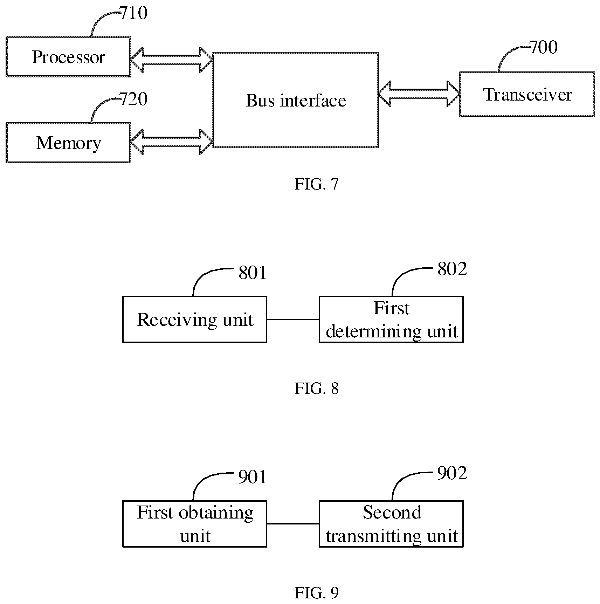

FIG. 7 is a schematic structural diagram of a ncr-Support base station according to an embodiment of the present application. As shown in FIG. 7, the ncr-Support base station includes a memory 720, a transceiver 700 and a processor 710,

where the memory 720 is used for storing a computer program, the transceiver 700 is used for receiving and transmitting data under the control of the processor, the processor 710 is used for reading the computer program in the memory 720 and performing the following operations:

obtaining coverage information of a repeater, where the coverage information is used for characterizing a beam supported by the repeater; and

transmitting beam indication information to the repeater based on the coverage information of the repeater, where the beam indication information is used for indicating a beam index used by the repeater in associated time resources.

In the ncr-Support base station provided by the embodiment of the present application, the ncr-Support base station may obtain the beam supported by the repeater by obtaining the coverage information of the repeater, determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment. The beam used is in the same direction as the target user equipment, and signal gain may be obtained.

The transceiver 700 is used for receiving and transmitting data under control of the processor 710.

In FIG. 7, a bus architecture may include any number of interconnected buses and bridges, which are linked together through various circuits of one or more processors represented by processor 710 and one or more memories represented by the memory 720. The bus architecture may also link together various other circuits, such as peripherals, voltage regulators, and power management circuits, which are well known in the art, and therefore will not be further described in the present application. The bus interface provides an interface. The transceiver 700 may be multiple elements, i.e., including a transmitter and a receiver, units for providing communication with various other devices over transmission media including wireless channels, wired channels, fiber optic cables, and the like. The processor 710 is responsible for managing the bus architecture and general processing, and the memory 720 may store data used by the processor 710 when performing operations.

The processor 710 may be a central processing unit (CPU), an application specific integrated circuit (ASIC), a field-programmable gate array (FPGA), or a complex programmable logic device (CPLD), the processor can also use a multi-core architecture.

In an embodiment, the coverage information includes a beam index value corresponding to each beam supported by the repeater.

In an embodiment, the coverage information further includes one or more of the following information.

a beam quantity of all beams supported by the repeater; or

a coverage type corresponding to each beam supported by the repeater; or

a beam angle corresponding to each beam supported by the repeater; or

a beam width corresponding to each beam supported by the repeater.

In an embodiment, the operations further include:

determining a first table corresponding to the coverage information; and

in case that the first table includes the beam index value corresponding to each beam supported by the repeater, obtaining the beam quantity of all beams supported by the repeater based on a length of the first table.

In an embodiment, the operations further include:

determining a second table corresponding to the coverage information, where the second table includes the beam width corresponding to each beam supported by the repeater; and

in case that a beam coverage of the repeater does not overlap, obtaining the beam quantity of all beams supported by the repeater based on a first beam width and a predefined beam width granularity, where the first beam width is a beam width of a broadcast beam supported by the repeater.

In an embodiment, obtaining the beam quantity of all beams supported by the repeater based on the first beam width and the predefined beam width granularity includes:

obtaining a beam quantity n of all beams supported by the repeater based on a formula n = $1 + \dfrac{m}{k}$ , where m represents the first beam width, and k represents the predefined beam width granularity.

In an embodiment, obtaining the coverage information of the repeater includes:

obtaining the coverage information of the repeater based on reporting information transmitted from the repeater and/or predefined auxiliary coverage information.

In an embodiment, the reporting information is transmitted through any of the following:

transmitted through a higher layer parameter; or

transmitted through a media access control control element (MAC CE) command; or

transmitted through side control information.

In an embodiment, an indication mode of the reporting information includes at least one of the following modes:

indicating the coverage type through a bit of a preset length; or

indicating the beam angle through an enumeration type.

In an embodiment, an indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment, a broadcast beam is not included in the second selectable set by default; or

a broadcast beam is included in the second selectable set by default; or

a broadcast beam is not included in the third selectable set by default; or

a broadcast beam is included in the third selectable set by default.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, transmitting the beam indication information to the repeater includes:
transmitting beam indication information periodically and/or aperiodically to the repeater.
In an embodiment, in case that the beam indication information is transmitted periodically, an indication mode of the beam indication information is a pattern indication mode; or
in case that the beam indication information is transmitted aperiodically, an indication mode of the beam indication information is a side control information indication mode.
In an embodiment, in case that the beam indication information is transmitted periodically, the beam indication information is transmitted through a higher layer parameter, a side control signaling or a media access control control element (MAC CE) command.
In an embodiment, in case that the beam indication information is transmitted in the side control information indication mode, the side control information indication mode includes at least one of the following modes:

indicating a signaling type through one or more bits; or

indicating a quantity of effective slots through a bit of a preset length.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the associated time resource includes a given symbol, a given slot, a given subframe, or a given frame.
In the ncr-Support base station provided by the embodiment of the present application, the ncr-Support base station may obtain the beam supported by the repeater by obtaining the coverage information of the repeater, determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment. The beam used is in the same direction as the target user equipment, and signal gain may be obtained.
It should be noted here that the above-mentioned ncr-Support base station according to the embodiments of the present application may implement all the method steps implemented by the above-mentioned method embodiments performed by the ncr-Support base station, and may achieve the same effect. The same parts and beneficial effects as the same method embodiments is not repeated in the present application.
FIG. 8 is a first schematic structural diagram of an apparatus for beam indication according to an embodiment of the present application. As shown in FIG. 8, the apparatus for beam indication is used in a repeater and includes a receiving unit 801 and a first determining unit 802.

The receiving unit 801 is used for receiving beam indication information transmitted from a ncr-Support base station, where the beam indication information is used for indicating a beam index used by the repeater in associated time resources.

The first determining unit 802 is used for determining the beam index used by the repeater in the associated time resources based on the beam indication information.

In the apparatus for beam indication provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, and the used beam is in the same direction as the target user equipment, and the signal gain may be obtained.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, the receiving unit is used for:
receiving beam indication information periodically and/or aperiodically transmitted from the ncr-Support base station.

In an embodiment, in case that the beam indication information is transmitted periodically, an indication mode of the beam indication information is a pattern indication mode; or
in case that the beam indication information is transmitted aperiodically, an indication mode of the beam indication information is a side control information indication mode.

In an embodiment, in case that the beam indication information is transmitted periodically, the beam indication information is transmitted through a higher layer parameter, a side control signaling or a media access control control element (MAC CE) command.

In an embodiment, the apparatus further includes a second determining unit, the second determining unit is used for:
in case that associated time resources corresponding to the pattern indication mode and the side control information indication mode overlap, determining a beam used by the repeater in the associated time resource based on the side control information indication mode.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the associated time resource includes a given symbol, a given slot, a given subframe, or a given frame.

In an embodiment, the apparatus further includes a first transmitting unit, the first transmitting unit is used for:
transmitting reporting information to the ncr-Support base station, the reporting information including at least one of the following information:

a beam quantity of all supported beams; or

a beam index value corresponding to each supported beam; or

a coverage type corresponding to each supported beam; or

a beam angle corresponding to each supported beam; or

a beam width corresponding to each supported beam.

In an embodiment, the reporting information is transmitted through any of the following:

transmitted through a higher layer parameter; or

transmitted through a media access control control element (MAC CE) command; or

transmitted through side control information.

In an embodiment, an indication mode of the reporting information includes at least one of the following modes:

indicating the coverage type through a bit of a preset length; or

indicating the beam angle through an enumeration type.

In an embodiment, an indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment, a broadcast beam is not included in the second selectable set by default; or

a broadcast beam is included in the second selectable set by default; or

a broadcast beam is not included in the third selectable set by default; or

a broadcast beam is included in the third selectable set by default.

In the apparatus for beam indication provided by the embodiment of the present application, by receiving the beam indication information transmitted from the ncr-Support base station, the repeater may determine the beam used in the associated time resource, the beam indication information may be determined by the ncr-Support base station based on the beam supported by the repeater, and the ncr-Support base station may configure the beam information for the repeater. The beam used by the repeater in the associated time resource may align with a target user equipment, and the used beam is in the same direction as the target user equipment, and the signal gain may be obtained.

FIG. 9 is a first schematic structural diagram of an apparatus for beam indication according to an embodiment of the present application. As shown in FIG. 9, the apparatus for beam indication is used in a ncr-Support base station and includes a first obtaining unit 901 and a second transmitting unit 902.

The first obtaining unit 901 is used for obtaining coverage information of a repeater, where the coverage information is used for characterizing a beam supported by the repeater.

The second transmitting unit 902 is used for transmitting beam indication information to the repeater based on the coverage information of the repeater, where the beam indication information is used for indicating a beam index used by the repeater in associated time resources.

In the apparatus for beam indication provided by the embodiment of the present application, the ncr-Support base station may obtain the beam supported by the repeater by obtaining the coverage information of the repeater, determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment. The beam used is in the same direction as the target user equipment, and signal gain may be obtained.

In an embodiment, the coverage information includes a beam index value corresponding to each beam supported by the repeater.

In an embodiment, the coverage information further includes one or more of the following information.

a beam quantity of all beams supported by the repeater; or

a coverage type corresponding to each beam supported by the repeater; or

a beam angle corresponding to each beam supported by the repeater; or

a beam width corresponding to each beam supported by the repeater.

In an embodiment, the apparatus further includes a second obtaining unit, the second obtaining unit is used for:

determining a first table corresponding to the coverage information; and
in case that the first table includes the beam index value corresponding to each beam supported by the repeater, obtaining the beam quantity of all beams supported by the repeater based on a length of the first table.

In an embodiment, the apparatus further includes a third obtaining unit, the third obtaining unit is used for:

determining a second table corresponding to the coverage information, where the second table includes the beam width corresponding to each beam supported by the repeater; and

in case that a beam coverage of the repeater does not overlap, obtaining the beam quantity of all beams supported by the repeater based on a first beam width and a predefined beam width granularity, where the first beam width is a beam width of a broadcast beam supported by the repeater.

In an embodiment, the third obtaining unit is used for:

obtaining a beam quantity n of all beams supported by the repeater based on a formula $n = 1 + \dfrac{m}{k}$, where m represents the first beam width, and k represents the predefined beam width granularity.

In an embodiment, the first obtaining unit is used for:

obtaining the coverage information of the repeater based on reporting information transmitted from the repeater and/or predefined auxiliary coverage information.

In an embodiment, the reporting information is transmitted through any of the following:

transmitted through a higher layer parameter; or

transmitted through a media access control control element (MAC CE) command; or

transmitted through side control information.

In an embodiment, an indication mode of the reporting information includes at least one of the following modes:

indicating the coverage type through a bit of a preset length; or
indicating the beam angle through an enumeration type.

In an embodiment, an indication mode of the reporting information further includes at least one of the following modes:

indicating a coverage type corresponding to all beams based on 1 bit; or

indicating a coverage type corresponding to each beam based on 1 bit; or

indicating a beam width of all beams based on a first selectable set of predefined beam widths and multiple bits; or

indicating beam widths of each beam based on a first selectable set of predefined beam widths and multiple bits.

In an embodiment, a reporting mode of the beam quantity includes at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

In an embodiment, a broadcast beam is not included in the second selectable set by default; or

a broadcast beam is included in the second selectable set by default; or

a broadcast beam is not included in the third selectable set by default; or

a broadcast beam is included in the third selectable set by default.

In an embodiment, the beam indication information includes at least one of the following information:

a configuration periodicity; or

an effective time offset; or

a beam index value and a candidate beam index set, where the beam index value is an index value corresponding to a beam in the candidate beam index set, the candidate beam index set is a subset or a universal set of a beam set, and the beam set includes all beams supported by the repeater; or

a beam quantity of all indicated beams.

In an embodiment, the second transmitting unit is used for:
transmitting beam indication information periodically and/or aperiodically to the repeater.
In an embodiment, in case that the beam indication information is transmitted periodically, an indication mode of the beam indication information is a pattern indication mode; or
in case that the beam indication information is transmitted aperiodically, an indication mode of the beam indication information is a side control information indication mode.
In an embodiment, in case that the beam indication information is transmitted periodically, the beam indication information is transmitted through a higher layer parameter, a side control signaling or a media access control control element (MAC CE) command.
In an embodiment, in case that the beam indication information is transmitted in the side control information indication mode, the side control information indication mode includes at least one of the following modes:

indicating a signaling type through one or more bits; or

indicating a quantity of effective slots through a bit of a preset length.

In an embodiment, the beam indication information further includes at least one of the following information:

an uplink/downlink indication identifier, used for indicating a beam indicated by the beam indication information to be uniformly used in uplink and downlink; or

an uplink indication identifier, used for indicating a beam indicated by the beam indication information to be used in uplink; or

a downlink indication identifier, used for indicating a beam indicated by the beam indication information to be used in downlink.

In an embodiment, the associated time resource includes a given symbol, a given slot, a given subframe, or a given frame.

In the apparatus for beam indication provided by the embodiment of the present application, the ncr-Support base station may obtain the beam supported by the repeater by obtaining the coverage information of the repeater, determine the beam indication information for the repeater, and transmit the beam indication information to the repeater. The repeater may determine the beam used in the associated time resource, and the ncr-Support base station may configure the beam information for the repeater. The beam used by the repeater in the associated time resource may align with the target user equipment. The beam used is in the same direction as the target user equipment, and signal gain may be obtained.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as U disk, mobile hard disk, read-only memory (ROM), random access memory (RAM), magnetic disk, or optical disk.

It should be noted here that the above-mentioned apparatus according to the embodiments of the present application can implement all the method steps implemented by the above-mentioned method embodiments, and can achieve the same effect. The same parts and beneficial effects as the same method embodiments will not be repeated here.

An embodiment of the present application further provides a processor-readable storage medium, where the processor-readable storage medium stores a computer program, the computer program is used for causing a processor to perform the steps of the methods described above, which, for example, includes:

receiving beam indication information transmitted from a ncr-Support base station, where the beam indication information is used for indicating a beam index used by the repeater in associated time resources; and

determining the beam index used by the repeater in the associated time resources based on the beam indication information.

Alternatively, the steps of the methods described above may include:

obtaining coverage information of a repeater, where the coverage information is used for characterizing a beam supported by the repeater; and

36

transmitting beam indication information to the repeater based on the coverage information of the repeater, where the beam indication information is used for indicating a beam index used by the repeater in associated time resources.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for beam indication, performed by a terminal, comprising:

   receiving beam indication information transmitted from a network-control repeater-Support, ncr-Support, base station, wherein the beam indication information is used for indicating a beam index used by the repeater in associated time resources; and
   determining the beam index used by the repeater in the associated time resources based on the beam indication information.

2. The method of claim 1, wherein the beam indication information comprises one or more of the following information:

   a configuration periodicity; or
   an effective time offset; or
   a beam index value and a candidate beam index set, wherein the beam index value is an index value corresponding to a beam in the candidate beam index set, the candidate beam index set is a subset or a universal set of a beam set, and the beam set comprises all beams supported by the repeater; or
   a beam quantity of all indicated beams.

3. The method of claim 1 or 2, wherein receiving the beam indication information transmitted from the ncr-Support base station comprises:

receiving beam indication information periodically and/or aperiodically transmitted from the ncr-Support base station.

4.   The method of claim 3, wherein

in case that the beam indication information is transmitted periodically, an indication mode of the beam indication information is a pattern indication mode; or,
in case that the beam indication information is transmitted aperiodically, an indication mode of the beam indication information is a side control information indication mode.

5.   The method of claim 3 or 4, wherein
in case that the beam indication information is transmitted periodically, the beam indication information is transmitted through a higher layer parameter, a side control signaling or a media access control control element, MAC CE, command.

6.   The method of claim 4, further comprising:
in case that associated time resources corresponding to the pattern indication mode and the side control information indication mode overlap, determining a beam index used by the repeater in the associated time resources based on the side control information indication mode.

7.   The method of claim 1 or 2, wherein the beam indication information further comprises one or more of the following information:

an uplink/downlink indication identifier, used for indicating a beam indicated by the beam indication information to be uniformly used in uplink and downlink; or
an uplink indication identifier, used for indicating a beam indicated by the beam indication information to be used in uplink; or
a downlink indication identifier, used for indicating a beam indicated by the beam indication information to be used in downlink.

8.   The method of claim 1 or 2, wherein the associated time resource comprises a given symbol, a given slot, a given subframe, or a given frame.

9.   The method of claim 1, further comprising:
transmitting reporting information to the ncr-Support base station, wherein the reporting information comprising at least one of the following information:

a beam quantity of all supported beams; or
a beam index value corresponding to each supported beam; or
a coverage type corresponding to each supported beam; or
a beam angle corresponding to each supported beam; or
a beam width corresponding to each supported beam.

10.  The method of claim 9, wherein the reporting information is transmitted through any of the following modes:

transmitted through a higher layer parameter; or
transmitted through a media access control control element, MAC CE, command; or
transmitted through side control information.

11.  The method of claim 10, wherein an indication mode of the reporting information comprises at least one of the following modes:

indicating the coverage type through a bit of a preset length; or
indicating the beam angle through an enumeration type.

12.  The method of claim 11, wherein the indication mode of the reporting information further comprises at least one of the following modes:

indicating a coverage type corresponding to all beams based on 1 bit; or

indicating a coverage type corresponding to each beam based on 1 bit; or
indicating a beam width of all beams based on a first selectable set of predefined beam widths and multiple bits; or
indicating beam widths of each beam based on a first selectable set of predefined beam widths and multiple bits.

13. The method of claim 9, wherein a reporting mode of the beam quantity comprises at least one of the following modes:

reporting an index value of an element in a second selectable set based on the second selectable set with a predefined beam quantity and at least 1 bit; or
reporting the beam quantity; or
reporting an index value of an element in a third selectable set based on the third selectable set with a predefined quantity of beam groups and beams in one group and at least 1 bit; or
reporting a quantity of beam groups based on a predefined quantity of beams in one group.

14. The method of claim 13, wherein

a broadcast beam is not comprised in the second selectable set by default; or
a broadcast beam is comprised in the second selectable set by default; or
a broadcast beam is not comprised in the third selectable set by default; or
a broadcast beam is comprised in the third selectable set by default.

15. A method for beam indication, performed by a network-control repeater-Support, ncr-Support, base station, comprising:

obtaining coverage information of a repeater, wherein the coverage information is used for characterizing a beam supported by the repeater; and
transmitting beam indication information to the repeater based on the coverage information of the repeater, wherein the beam indication information is used for indicating a beam index used by the repeater in associated time resources.

16. The method of claim 15, wherein the coverage information comprises a beam index value corresponding to each beam supported by the repeater.

17. The method of claim 16, wherein the coverage information further comprises one or more of the following information:

a beam quantity of all beams supported by the repeater; or
a coverage type corresponding to each beam supported by the repeater; or
a beam angle corresponding to each beam supported by the repeater; or
a beam width corresponding to each beam supported by the repeater.

18. The method of claim 17, further comprising:

determining a first table corresponding to the coverage information; and
in case that the first table comprises the beam index value corresponding to each beam supported by the repeater, obtaining the beam quantity of all beams supported by the repeater based on a length of the first table.

19. The method of claim 17, further comprising:

determining a second table corresponding to the coverage information, wherein the second table comprises the beam width corresponding to each beam supported by the repeater; and
in case that a beam coverage of the repeater does not overlap, obtaining the beam quantity of all beams supported by the repeater based on a first beam width and a predefined beam width granularity, wherein the first beam width is a beam width of a broadcast beam supported by the repeater.

20. The method of claim 19, wherein obtaining the beam quantity of all beams supported by the repeater based on the first beam width and the predefined beam width granularity comprises:

obtaining a beam quantity n of all beams supported by the repeater based on a formula $n = 1 + \dfrac{m}{k}$ , wherein m represents the first beam width, and k represents the predefined beam width granularity.

21. The method of claim 17, wherein obtaining the coverage information of the repeater comprises:
obtaining the coverage information of the repeater based on reporting information transmitted from the repeater and/or predefined auxiliary coverage information.

22. The method of claim 21, wherein the reporting information is transmitted through any of the following modes:

transmitted through a higher layer parameter; or
transmitted through a media access control control element, MAC CE, command; or
transmitted through side control information.

23. The method of claim 22, wherein an indication mode of the reporting information comprises at least one of the following modes:

indicating the coverage type through a bit of a preset length; or
indicating the beam angle through an enumeration type.

24. The method of claim 23, wherein the indication mode of the reporting information further comprises at least one of the following modes:

indicating a coverage type corresponding to all beams based on 1 bit; or
indicating a coverage type corresponding to each beam based on 1 bit; or
indicating a beam width of all beams based on a first selectable set of predefined beam widths and multiple bits; or
indicating beam widths of each beam based on a first selectable set of predefined beam widths and multiple bits.

25. The method of claim 21, wherein a reporting mode of the beam quantity comprises at least one of the following modes:

reporting an index value of an element in a second selectable set based on the second selectable set with a predefined beam quantity and at least 1 bit; or
reporting the beam quantity; or
reporting an index value of an element in a third selectable set based on the third selectable set with a predefined quantity of beam groups and beams in one group and at least 1 bit; or
reporting a quantity of beam groups based on a predefined quantity of beams in one group.

26. The method of claim 25, wherein

a broadcast beam is not comprised in the second selectable set by default; or
a broadcast beam is comprised in the second selectable set by default; or
a broadcast beam is not comprised in the third selectable set by default; or
a broadcast beam is comprised in the third selectable set by default.

27. The method of claim 15, wherein the beam indication information comprises one or more of the following information:

a configuration periodicity; or
an effective time offset; or
a beam index value and a candidate beam index set, wherein the beam index value is an index value corresponding to a beam in the candidate beam index set, the candidate beam index set is a subset or a universal set of a beam set, and the beam set comprises all beams supported by the repeater; or
a beam quantity of all indicated beams.

28. The method of any one of claims 15 to 27, wherein transmitting the beam indication information to the repeater comprises:
transmitting beam indication information periodically and/or aperiodically to the repeater.

29. The method of claim 28, wherein

in case that the beam indication information is transmitted periodically, an indication mode of the beam indication information is a pattern indication mode; or
in case that the beam indication information is transmitted aperiodically, an indication mode of the beam indication information is a side control information indication mode.

30. The method of claim 28 or 29, wherein
in case that the beam indication information is transmitted periodically, the beam indication information is transmitted through a higher layer parameter, a side control signaling or a media access control control element, MAC CE, command.

31. The method of claim 29, wherein in case that the beam indication information is transmitted in the side control information indication mode, the side control information indication mode comprises at least one of the following modes:

indicating a signaling type through one or more bits; or
indicating a quantity of effective slots through a bit of a preset length.

32. The method of any one of claims 15 to 27 or any one of claims 29 to 31, wherein the beam indication information further comprises one or more of the following information:

an uplink/downlink indication identifier, used for indicating a beam indicated by the beam indication information to be uniformly used in uplink and downlink; or
an uplink indication identifier, used for indicating a beam indicated by the beam indication information to be used in uplink; or
a downlink indication identifier, used for indicating a beam indicated by the beam indication information to be used in downlink.

33. The method of any one of claims 15 to 27 or any one of claims 29 to 31, wherein the associated time resource comprises a given symbol, a given slot, a given subframe, or a given frame.

34. A repeater, comprising a memory, a transceiver and a processor,
wherein the memory is used for storing a computer program, the transceiver is used for transmitting and receiving data under control of the processor, and the processor is used for reading the computer program in the memory and performing the following operations:

receiving beam indication information transmitted from a network-control repeater-Support, ncr-Support, base station, wherein the beam indication information is used for indicating a beam index used by the repeater in associated time resources; and
determining the beam index used by the repeater in the associated time resources based on the beam indication information.

35. The repeater of claim 34, wherein the beam indication information comprises one or more of the following information:

a configuration periodicity; or
an effective time offset; or
a beam index value and a candidate beam index set, wherein the beam index value is an index value corresponding to a beam in the candidate beam index set, the candidate beam index set is a subset or a universal set of a beam set, and the beam set comprises all beams supported by the repeater; or
a beam quantity of all indicated beams.

36. The repeater of claim 34 or 35, wherein receiving the beam indication information transmitted from the ncr-Support base station comprises:
receiving beam indication information periodically and/or aperiodically transmitted from the ncr-Support base station.

37. The repeater of claim 36, wherein

in case that the beam indication information is transmitted periodically, an indication mode of the beam indication information is a pattern indication mode; or,
in case that the beam indication information is transmitted aperiodically, an indication mode of the beam indication information is a side control information indication mode.

**38.** The repeater of claim 36 or 37, wherein
in case that the beam indication information is transmitted periodically, the beam indication information is transmitted through a higher layer parameter, a side control signaling or a media access control control element, MAC CE, command.

**39.** The repeater of claim 37, wherein the operations further comprise:
in case that associated time resources corresponding to the pattern indication mode and the side control information indication mode overlap, determining a beam used by the repeater in the associated time resource based on the side control information indication mode.

**40.** The repeater of claim 34 or 35, wherein the beam indication information further comprises one or more of the following information:

an uplink/downlink indication identifier, used for indicating a beam indicated by the beam indication information to be uniformly used in uplink and downlink; or
an uplink indication identifier, used for indicating a beam indicated by the beam indication information to be used in uplink; or
a downlink indication identifier, used for indicating a beam indicated by the beam indication information to be used in downlink.

**41.** The repeater of claim 34 or 35, wherein the associated time resource comprises a given symbol, a given slot, a given subframe, or a given frame.

**42.** The repeater of claim 34, wherein the operations further comprise:
transmitting reporting information to the ncr-Support base station, wherein the reporting information comprising at least one of the following information:

a beam quantity of all supported beams; or
a beam index value corresponding to each supported beam; or
a coverage type corresponding to each supported beam; or
a beam angle corresponding to each supported beam; or
a beam width corresponding to each supported beam.

**43.** The repeater of claim 42, wherein the reporting information is transmitted through any of the following modes:

transmitted through a higher layer parameter; or
transmitted through a media access control control element, MAC CE, command; or
transmitted through side control information.

**44.** The repeater of claim 43, wherein an indication mode of the reporting information comprises at least one of the following modes:

indicating the coverage type through a bit of a preset length; or
indicating the beam angle through an enumeration type.

**45.** The repeater of claim 44, wherein the indication mode of the reporting information further comprises at least one of the following modes:

indicating a coverage type corresponding to all beams based on 1 bit; or
indicating a coverage type corresponding to each beam based on 1 bit; or
indicating a beam width of all beams based on a first selectable set of predefined beam widths and multiple bits; or
indicating beam widths of each beam based on a first selectable set of predefined beam widths and multiple bits.

**46.** The repeater of claim 42, wherein a reporting mode of the beam quantity comprises at least one of the following modes:

reporting an index value of an element in a second selectable set based on the second selectable set with a predefined beam quantity and at least 1 bit; or

reporting the beam quantity; or

reporting an index value of an element in a third selectable set based on the third selectable set with a predefined quantity of beam groups and beams in one group and at least 1 bit; or

reporting a quantity of beam groups based on a predefined quantity of beams in one group.

47. The repeater of claim 46, wherein

a broadcast beam is not comprised in the second selectable set by default; or
a broadcast beam is comprised in the second selectable set by default; or
a broadcast beam is not comprised in the third selectable set by default; or
a broadcast beam is comprised in the third selectable set by default.

48. A network-control repeater-Support, ncr-Support, base station, comprising a memory, a transceiver and a processor, wherein the memory is used for storing a computer program, the transceiver is used for transmitting and receiving data under control of the processor, and the processor is used for reading the computer program in the memory and performing the following operations:

obtaining coverage information of a repeater, wherein the coverage information is used for characterizing a beam supported by the repeater; and
transmitting beam indication information to the repeater based on the coverage information of the repeater, wherein the beam indication information is used for indicating a beam index used by the repeater in associated time resources.

49. The ncr-Support base station of claim 48, wherein the coverage information comprises a beam index value corresponding to each beam supported by the repeater.

50. The ncr-Support base station of claim 49, wherein the coverage information further comprises one or more of the following information:

a beam quantity of all beams supported by the repeater; or
a coverage type corresponding to each beam supported by the repeater; or
a beam angle corresponding to each beam supported by the repeater; or
a beam width corresponding to each beam supported by the repeater.

51. The ncr-Support base station of claim 50, wherein the operations further comprise:

determining a first table corresponding to the coverage information; and
in case that the first table comprises the beam index value corresponding to each beam supported by the repeater, obtaining the beam quantity of all beams supported by the repeater based on a length of the first table.

52. The ncr-Support base station of claim 50, wherein the operations further comprise:

determining a second table corresponding to the coverage information, wherein the second table comprises the beam width corresponding to each beam supported by the repeater; and
in case that a beam coverage of the repeater does not overlap, obtaining the beam quantity of all beams supported by the repeater based on a first beam width and a predefined beam width granularity, wherein the first beam width is a beam width of a broadcast beam supported by the repeater.

53. The ncr-Support base station of claim 52, wherein obtaining the beam quantity of all beams supported by the repeater based on the first beam width and the predefined beam width granularity comprises:

obtaining a beam quantity n of all beams supported by the repeater based on a formula $n = 1 + \dfrac{m}{k}$, wherein m represents the first beam width, and k represents the predefined beam width granularity.

54. The ncr-Support base station of claim 50, wherein obtaining the coverage information of the repeater comprises:
obtaining the coverage information of the repeater based on reporting information transmitted from the repeater and/or predefined auxiliary coverage information.

55. The ncr-Support base station of claim 54, wherein the reporting information is transmitted through any of the following modes:

transmitted through a higher layer parameter; or
transmitted through a media access control control element, MAC CE, command; or
transmitted through side control information.

56. The ncr-Support base station of claim 55, wherein an indication mode of the reporting information comprises at least one of the following modes:

indicating the coverage type through a bit of a preset length; or
indicating the beam angle through an enumeration type.

57. The ncr-Support base station of claim 56, wherein the indication mode of the reporting information further comprises at least one of the following modes:

indicating a coverage type corresponding to all beams based on 1 bit; or
indicating a coverage type corresponding to each beam based on 1 bit; or
indicating a beam width of all beams based on a first selectable set of predefined beam widths and multiple bits; or
indicating beam widths of each beam based on a first selectable set of predefined beam widths and multiple bits.

58. The ncr-Support base station of claim 54, wherein a reporting mode of the beam quantity comprises at least one of the following modes:

reporting an index value of an element in a second selectable set based on the second selectable set with a predefined beam quantity and at least 1 bit; or
reporting the beam quantity; or
reporting an index value of an element in a third selectable set based on the third selectable set with a predefined quantity of beam groups and beams in one group and at least 1 bit; or
reporting a quantity of beam groups based on a predefined quantity of beams in one group.

59. The ncr-Support base station of claim 58, wherein

a broadcast beam is not comprised in the second selectable set by default; or
a broadcast beam is comprised in the second selectable set by default; or
a broadcast beam is not comprised in the third selectable set by default; or
a broadcast beam is comprised in the third selectable set by default.

60. The ncr-Support base station of claim 48, wherein the beam indication information comprises one or more of the following information:

a configuration periodicity; or
an effective time offset; or
a beam index value and a candidate beam index set, wherein the beam index value is an index value corresponding to a beam in the candidate beam index set, the candidate beam index set is a subset or a universal set of a beam set, and the beam set comprises all beams supported by the repeater; or
a beam quantity of all indicated beams.

61. The ncr-Support base station of any one of claims 48 to 60, wherein transmitting the beam indication information to the repeater comprises:
transmitting beam indication information periodically and/or aperiodically to the repeater.

62. The ncr-Support base station of claim 61, wherein

in case that the beam indication information is transmitted periodically, an indication mode of the beam indication information is a pattern indication mode; or
in case that the beam indication information is transmitted aperiodically, an indication mode of the beam indication information is a side control information indication mode.

**63.** The ncr-Support base station of claim 61 or 62, wherein
in case that the beam indication information is transmitted periodically, the beam indication information is transmitted through a higher layer parameter, a side control signaling or a media access control control element, MAC CE, command.

**64.** The ncr-Support base station of claim 62, wherein in case that the beam indication information is transmitted in the side control information indication mode, the side control information indication mode comprises at least one of the following modes:

indicating a signaling type through one or more bits; or
indicating a quantity of effective slots through a bit of a preset length.

**65.** The ncr-Support base station of any one of claims 48 to 60 or any one of claims 62 to 64, wherein the beam indication information further comprises one or more of the following information:

an uplink/downlink indication identifier, used for indicating a beam indicated by the beam indication information to be uniformly used in uplink and downlink; or
an uplink indication identifier, used for indicating a beam indicated by the beam indication information to be used in uplink; or
a downlink indication identifier, used for indicating a beam indicated by the beam indication information to be used in downlink.

**66.** The ncr-Support base station of any one of claims 48 to 60 or any one of claims 62 to 64, wherein the associated time resource comprises a given symbol, a given slot, a given subframe, or a given frame.

**67.** An apparatus for beam indication, applied to a repeater, comprising:

a receiving unit, used for receiving beam indication information transmitted from a network-control repeater-Support, ncr-Support, base station, wherein the beam indication information is used for indicating a beam index used by the repeater in associated time resources; and
a first determining unit, used for determining the beam index used by the repeater in the associated time resources based on the beam indication information.

**68.** The apparatus of claim 67, wherein the beam indication information comprises one or more of the following information:

a configuration periodicity; or
an effective time offset; or
a beam index value and a candidate beam index set, wherein the beam index value is an index value corresponding to a beam in the candidate beam index set, the candidate beam index set is a subset or a universal set of a beam set, and the beam set comprises all beams supported by the repeater; or
a beam quantity of all indicated beams.

**69.** The apparatus of claim 67 or 68, wherein the receiving unit is further used for:
receiving beam indication information periodically and/or aperiodically transmitted from the ncr-Support base station.

**70.** The apparatus of claim 69, wherein

in case that the beam indication information is transmitted periodically, an indication mode of the beam indication information is a pattern indication mode; or,
in case that the beam indication information is transmitted aperiodically, an indication mode of the beam indication information is a side control information indication mode.

**71.** The apparatus of claim 69 or 70, wherein
in case that the beam indication information is transmitted periodically, the beam indication information is transmitted through a higher layer parameter, a side control signaling or a media access control control element, MAC CE, command.

72. The apparatus of claim 70, further comprising:
a second determining unit, used for, in case that associated time resources corresponding to the pattern indication mode and the side control information indication mode overlap, determining a beam used by the repeater in the associated time resource based on the side control information indication mode.

73. The apparatus of claim 67 or 68, wherein the beam indication information further comprises one or more of the following information:

an uplink/downlink indication identifier, used for indicating a beam indicated by the beam indication information to be uniformly used in uplink and downlink; or
an uplink indication identifier, used for indicating a beam indicated by the beam indication information to be used in uplink; or
a downlink indication identifier, used for indicating a beam indicated by the beam indication information to be used in downlink.

74. The apparatus of claim 67 or 68, wherein the associated time resource comprises a given symbol, a given slot, a given subframe, or a given frame.

75. The apparatus of claim 67, further comprising:
a third transmitting unit, used for transmitting reporting information to the ncr-Support base station, wherein the reporting information comprising at least one of the following information:

a beam quantity of all supported beams; or
a beam index value corresponding to each supported beam; or
a coverage type corresponding to each supported beam; or
a beam angle corresponding to each supported beam; or
a beam width corresponding to each supported beam.

76. The apparatus of claim 75, wherein the reporting information is transmitted through any of the following modes:

transmitted through a higher layer parameter; or
transmitted through a media access control control element, MAC CE, command; or
transmitted through side control information.

77. The apparatus of claim 76, wherein an indication mode of the reporting information comprises at least one of the following modes:

indicating the coverage type through a bit of a preset length; or
indicating the beam angle through an enumeration type.

78. The apparatus of claim 77, wherein the indication mode of the reporting information further comprises at least one of the following modes:

indicating a coverage type corresponding to all beams based on 1 bit; or
indicating a coverage type corresponding to each beam based on 1 bit; or
indicating a beam width of all beams based on a first selectable set of predefined beam widths and multiple bits; or
indicating beam widths of each beam based on a first selectable set of predefined beam widths and multiple bits.

79. The apparatus of claim 75, wherein a reporting mode of the beam quantity comprises at least one of the following modes:

reporting an index value of an element in a second selectable set based on the second selectable set with a predefined beam quantity and at least 1 bit; or
reporting the beam quantity; or
reporting an index value of an element in a third selectable set based on the third selectable set with a predefined quantity of beam groups and beams in one group and at least 1 bit; or
reporting a quantity of beam groups based on a predefined quantity of beams in one group.

80. The apparatus of claim 79, wherein

a broadcast beam is not comprised in the second selectable set by default; or
a broadcast beam is comprised in the second selectable set by default; or
a broadcast beam is not comprised in the third selectable set by default; or
a broadcast beam is comprised in the third selectable set by default.

81. An apparatus for beam indication, applied to a network-control repeater-Support, ncr-Support, base station, comprising:

a first obtaining unit, used for obtaining coverage information of a repeater, wherein the coverage information is used for characterizing a beam supported by the repeater; and
a second transmitting unit, used for transmitting beam indication information to the repeater based on the coverage information of the repeater, wherein the beam indication information is used for indicating a beam index used by the repeater in associated time resources.

82. The apparatus of claim 81, wherein the coverage information comprises a beam index value corresponding to each beam supported by the repeater.

83. The apparatus of claim 82, wherein the coverage information further comprises one or more of the following information:

a beam quantity of all beams supported by the repeater; or
a coverage type corresponding to each beam supported by the repeater; or
a beam angle corresponding to each beam supported by the repeater; or
a beam width corresponding to each beam supported by the repeater.

84. The apparatus of claim 83, further comprising:

a third determining unit, used for determining a first table corresponding to the coverage information; and
a second obtaining unit, used for in case that the first table comprises the beam index value corresponding to each beam supported by the repeater, obtaining the beam quantity of all beams supported by the repeater based on a length of the first table.

85. The apparatus of claim 83, further comprising:

a fourth determining unit, used for determining a second table corresponding to the coverage information, wherein the second table comprises the beam width corresponding to each beam supported by the repeater; and
a third obtaining unit, used for, in case that a beam coverage of the repeater does not overlap, obtaining the beam quantity of all beams supported by the repeater based on a first beam width and a predefined beam width granularity, wherein the first beam width is a beam width of a broadcast beam supported by the repeater.

86. The apparatus of claim 85, wherein the third obtaining unit is used for:

obtaining a beam quantity n of all beams supported by the repeater based on a formula n = $1 + \frac{m}{k}$, wherein m represents the first beam width, and k represents the predefined beam width granularity.

87. The apparatus of claim 83, wherein the first obtaining unit is used for:
obtaining the coverage information of the repeater based on reporting information transmitted from the repeater and/or predefined auxiliary coverage information.

88. The apparatus of claim 87, wherein the reporting information is transmitted through any of the following modes:

transmitted through a higher layer parameter; or
transmitted through a media access control control element, MAC CE, command; or
transmitted through side control information.

89. The apparatus of claim 88, wherein an indication mode of the reporting information comprises at least one of the following modes:

indicating the coverage type through a bit of a preset length; or
indicating the beam angle through an enumeration type.

90. The apparatus of claim 89, wherein the indication mode of the reporting information further comprises at least one of the following modes:

indicating a coverage type corresponding to all beams based on 1 bit; or
indicating a coverage type corresponding to each beam based on 1 bit; or
indicating a beam width of all beams based on a first selectable set of predefined beam widths and multiple bits; or
indicating beam widths of each beam based on a first selectable set of predefined beam widths and multiple bits.

91. The apparatus of claim 87, wherein a reporting mode of the beam quantity comprises at least one of the following modes:

reporting an index value of an element in a second selectable set based on the second selectable set with a predefined beam quantity and at least 1 bit; or
reporting the beam quantity; or
reporting an index value of an element in a third selectable set based on the third selectable set with a predefined quantity of beam groups and beams in one group and at least 1 bit; or
reporting a quantity of beam groups based on a predefined quantity of beams in one group.

92. The apparatus of claim 91, wherein

a broadcast beam is not comprised in the second selectable set by default; or
a broadcast beam is comprised in the second selectable set by default; or
a broadcast beam is not comprised in the third selectable set by default; or
a broadcast beam is comprised in the third selectable set by default.

93. The apparatus of claim 91, wherein the beam indication information comprises one or more of the following information:

a configuration periodicity; or
an effective time offset; or
a beam index value and a candidate beam index set, wherein the beam index value is an index value corresponding to a beam in the candidate beam index set, the candidate beam index set is a subset or a universal set of a beam set, and the beam set comprises all beams supported by the repeater; or
a beam quantity of all indicated beams.

94. The apparatus of any one of claims 81 to 93, wherein the second transmitting unit is used for:
transmitting beam indication information periodically and/or aperiodically to the repeater.

95. The apparatus of claim 94, wherein

in case that the beam indication information is transmitted periodically, an indication mode of the beam indication information is a pattern indication mode; or
in case that the beam indication information is transmitted aperiodically, an indication mode of the beam indication information is a side control information indication mode.

96. The apparatus of claim 94 or 95, wherein
in case that the beam indication information is transmitted periodically, the beam indication information is transmitted through a higher layer parameter, a side control signaling or a media access control control element, MAC CE, command.

97. The apparatus of claim 95, wherein in case that the beam indication information is transmitted in the side control information indication mode, the side control information indication mode comprises at least one of the following modes:

indicating a signaling type through one or more bits; or
indicating a quantity of effective slots through a bit of a preset length.

98. The apparatus of any one of claims 81 to 93 or any one of claims 95 to 97, wherein the beam indication information further comprises one or more of the following information:

an uplink/downlink indication identifier, used for indicating a beam indicated by the beam indication information to be uniformly used in uplink and downlink; or
an uplink indication identifier, used for indicating a beam indicated by the beam indication information to be used in uplink; or
a downlink indication identifier, used for indicating a beam indicated by the beam indication information to be used in downlink.

99. The apparatus of any one of claims 81 to 93 or any one of claims 95 to 97, wherein the associated time resource comprises a given symbol, a given slot, a given subframe, or a given frame.

100.
A processor-readable storage medium, wherein the processor-readable storage medium stores a computer program, and the computer is used for causing a processor to perform the method of any one of claims 1 to 33.

Receiving beam indication information transmitted from a ncr-Support base station, where the beam indication information is used for indicating a beam index used by the repeater in associated time resources
⌐101

Determining the beam index used by the repeater in the associated time resources based on the beam indication information
⌐102

FIG. 1

Obtaining coverage information of a repeater, where the coverage information is used for characterizing a beam supported by the repeater
⌐201

Transmitting beam indication information to the repeater based on the coverage information of the repeater, where the beam indication information is used for indicating a beam index used by the repeater in associated time resources
⌐202

FIG. 2

Ncr-Support base station

Repeater

SSB-A

Beam-SSB-A

Beam-4

Beam-3   UE

Beam-2

Beam-1

FIG. 3

Period P=5ms

| DL only slot | DL only slot | Mixed-slot | UL only slot | UL only slot |

Beam ID
indication

| 0 | 0 | 1 | 1 | 1 | 1 | 2 | 2 | 2 | 2 | 3 | 3 | 3 | 3 |

Beam indication (transmission/reception)

FIG. 4

| DL only slot | DL only slot | Mixed-slot | UL only slot | UL only slot |

ACK feedback

Multi-slot beam ID indication

FIG. 5

Processor ~610

Memory ~620

Bus interface

Transceiver ~600

FIG. 6

710

Processor

720

Memory

Bus interface

700

Transceiver

FIG. 7

801

Receiving unit

802

First
determining unit

FIG. 8

901

First obtaining
unit

902

Second
transmitting unit

FIG. 9

<div align="center">

**INTERNATIONAL SEARCH REPORT**

</div>

| International application No. |
|---|
| **PCT/CN2023/084983** |

| A. | CLASSIFICATION OF SUBJECT MATTER |
|---|---|

H04W 72/04(2023.01)i

According to International Patent Classification (IPC) or to both national classification and IPC

| B. | FIELDS SEARCHED |
|---|---|

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

3GPP, CJFD, CNABS, CNTXT, ENTXTC, WPABSC: 标识, 波束, 分配, 基站, 接入点, 可用, 配置, 宿主基站, 施主基站, 直放站, 指定, 指示, 中继, identity, beam, allocation, base station, access point, available, configuration, host base station, donor base station, direct station, designation, indication, relay

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2013091678 A1 (NOKIA SIEMENS NETWORKS OY) 27 June 2013 (2013-06-27) description, pages 14-16 and 23-24, and claims 1-15 | 1-100 |
| A | CN 110099021 A (CHENGDU HUAWEI TECHNOLOGIES CO., LTD.) 06 August 2019 (2019-08-06) entire document | 1-100 |
| A | CN 110300451 A (CHINA MOBILE COMMUNICATION LTD., RESEARCH INSTITUTE et al.) 01 October 2019 (2019-10-01) entire document | 1-100 |
| A | WO 2010048855 A1 (ZTE CORP.) 06 May 2010 (2010-05-06) entire document | 1-100 |
| A | WO 2021164592 A1 (HUAWEI TECHNOLOGIES CO., LTD.) 26 August 2021 (2021-08-26) entire document | 1-100 |
| A | ZTE et al. "Beam management for DL Control Channel" *3GPP TSG RAN WG1 NR Ad-Hoc Meeting,R1-1700131*, 20 January 2017 (2017-01-20), entire document | 1-100 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2023** | **19 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/084983**

| Patent document cited in search report | | | Publication date (day/month/year) | Patent family member(s) | | | Publication date (day/month/year) |
|---|---|---|---|---|---|---|---|
| WO | 2013091678 | A1 | 27 June 2013 | EP | 2795959 | A1 | 29 October 2014 |
| CN | 110099021 | A | 06 August 2019 | EP | 3720074 | A1 | 07 October 2020 |
| | | | | WO | 2019149072 | A1 | 08 August 2019 |
| | | | | US | 2020336260 | A1 | 22 October 2020 |
| | | | | IN | 202027025050 | A | 02 October 2020 |
| CN | 110300451 | A | 01 October 2019 | WO | 2019179323 | A1 | 26 September 2019 |
| WO | 2010048855 | A1 | 06 May 2010 | CN | 101420702 | A | 29 April 2009 |
| WO | 2021164592 | A1 | 26 August 2021 | EP | 4090113 | A1 | 16 November 2022 |
| | | | | US | 2022400478 | A1 | 15 December 2022 |
| | | | | CN | 113286366 | A | 20 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210474519